(19) Europäisches Patentamt
European Patent Office
Office européen des brevets

(11) **EP 4 386 671 B1**

(12) **EUROPEAN PATENT SPECIFICATION**

(45) Date of publication and mention
of the grant of the patent:
**22.10.2025 Bulletin 2025/43**

(21) Application number: **23216598.5**

(22) Date of filing: **14.12.2023**

(51) International Patent Classification (IPC):
**G06T 7/246** (2017.01)

(52) Cooperative Patent Classification (CPC):
**G06T 7/246;** G06T 2207/10016; G06T 2207/10028;
G06T 2207/20081; G06T 2207/20084;
G06T 2207/30196

(54) **DEPTH-BASED 3D HUMAN POSE DETECTION AND TRACKING**

TIEFENBASIERTE 3D-DETEKTION UND -VERFOLGUNG MENSCHLICHER POSEN

DÉTECTION ET SUIVI DE POSE HUMAINE 3D BASÉE SUR LA PROFONDEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2022 US 202218065726**

(43) Date of publication of application:
**19.06.2024 Bulletin 2024/25**

(73) Proprietor: **Google LLC
Mountain View, CA 94043 (US)**

(72) Inventors:
• **WANG, Yixuan
Mountain View, CA 94043 (US)**
• **LU, Ting
Mountain View, CA 94043 (US)**

(74) Representative: **Derry, Paul Stefan
Venner Shipley LLP
200 Aldersgate
London EC1A 4HD (GB)**

(56) References cited:
**CN-A- 113 610 889     US-A1- 2022 366 725
US-B1- 11 348 279**

• **CHEN TIANLANG ET AL: "Anatomy-Aware 3D
Human Pose Estimation With Bone-Based Pose
Decomposition", IEEE TRANSACTIONS ON
CIRCUITS AND SYSTEMS FOR VIDEO
TECHNOLOGY, IEEE, USA, vol. 32, no. 1, 4
February 2021 (2021-02-04), pages 198 - 209,
XP011897362, ISSN: 1051-8215, [retrieved on
20220110], DOI: 10.1109/TCSVT.2021.3057267**
• **HAOMING CHEN ET AL: "2D Human Pose
Estimation: A Survey", ARXIV.ORG, CORNELL
UNIVERSITY LIBRARY, 201 OLIN LIBRARY
CORNELL UNIVERSITY ITHACA, NY 14853, 15
April 2022 (2022-04-15), XP091204558**

**Description**

## BACKGROUND

As technology advances, various types of robotic devices are being created for performing a variety of functions that may assist users. Robotic devices may be used for applications involving material handling, transportation, welding, assembly, and dispensing, among others. Over time, the manner in which these robotic systems operate is becoming more intelligent, efficient, and intuitive. As robotic systems become increasingly prevalent in numerous aspects of modern life, it is desirable for robotic systems to be efficient. Therefore, a demand for efficient robotic systems has helped open up a field of innovation in actuators, movement, sensing techniques, as well as component design and assembly.

CN 113 610 889 A discloses a method, device, intelligent terminal and storage medium for obtaining a three-dimensional human body model.

## SUMMARY

The matter for protection is defined by the claims.

Sensor data that includes image data and depth data may be used to determine respective three-dimensional (3D) positions of a plurality of keypoints that represent body locations of an actor. A loss function may be used to quantify (i) a spatial consistency between the 3D positions and the sensor data and (ii) a temporal consistency between consecutive 3D positions determined over time. The spatial consistency may be based on a product of keypoint visibility values and depth field values. The keypoint visibility values may indicate an extent to which each keypoint is visible within the sensor data, and may thus provide weights for corresponding depth field values. The depth field values may quantify a distance between the determined 3D keypoint positions and corresponding reference points represented by the depth data, thus indicating how well the determined 3D positions match the sensor data. The temporal consistency may be based on a difference between (i) the 3D keypoint positions determined for a given time and (ii) prior 3D positions associated with a preceding time or a projection of the prior 3D positions from the prior time to the given time. The 3D positions may be determined such that a loss value generated by the loss function is reduced and/or minimized, while also satisfying zero or more constraints that may, for example, quantify a physical plausibility of the 3D positions.

In a first embodiment, a method includes determining, for each respective keypoint of a plurality of keypoints, a corresponding initial 3D position of the respective keypoint. The plurality of keypoints may represent a corresponding plurality of predetermined body locations of a body of an actor. The method also includes receiving sensor data representing the body of the actor. The sensor data may include (i) image data and (ii) depth data. The method additionally includes determining, for each respective keypoint of the plurality of keypoints, a corresponding visibility value based on a visibility of the respective keypoint in the image data, and determining, for each respective keypoint of the plurality of keypoints, a corresponding depth field value based on a distance between the corresponding initial 3D position and a corresponding reference 3D position that is based on at least one nearest neighbor of the corresponding initial 3D position in the depth data. The method further includes determining, based on the corresponding visibility value and the corresponding depth field value of each respective keypoint of the plurality of keypoints, a loss value. The method further includes determining, for each respective keypoint of the plurality of keypoints, a corresponding updated 3D position of the respective keypoint based on the loss value.

In a second embodiment, a system includes a processor and a non-transitory computer-readable medium having stored thereon instructions that, when executed by the processor, cause the processor to perform operations in accordance with the first embodiment.

In a third embodiment, a non-transitory computer-readable medium has stored thereon instructions that, when executed by a computing device, cause the computing device to perform operations in accordance with the first embodiment.

In a fourth embodiment, a system includes various means for carrying out each of the operations of the first embodiment.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

## BRIEF DESCRIPTION OF THE DRAWINGS

Figure 1 illustrates a configuration of a robotic system, in accordance with example embodiments.

Figure 2 illustrates a mobile robot, in accordance with example embodiments.

Figure 3 illustrates an exploded view of a mobile robot, in accordance with example embodiments.

Figure 4 illustrates a robotic arm, in accordance with example embodiments.

Figure 5 illustrates a robot viewing an actor, in accordance with example embodiments.

Figure 6 illustrates a keypoint position system, in accordance with example embodiments.

Figure 7A provides a graphical representation of depth field values, in accordance with example embodiments.

Figure 7B provides a graphical representation of 3D position difference values, in accordance with example embodiments.

Figure 8A provides a graphical representation of pixel position difference values, in accordance with example embodiments.

Figure 8B provides a graphical representation of limb length values, in accordance with example embodiments.

Figure 9 illustrates a flow chart, in accordance with example embodiments.

## DETAILED DESCRIPTION

Example methods, devices, and systems are described herein. It should be understood that the words "example" and "exemplary" are used herein to mean "serving as an example, instance, or illustration." Any embodiment or feature described herein as being an "example," "exemplary," and/or "illustrative" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order. Unless otherwise noted, figures are not drawn to scale.

### I. Overview

The use of robotic devices in various settings is becoming increasingly prevalent. In many of these settings, robots coordinate and/or cooperate with humans and other actors, including animals and other robots. Accordingly, it is becoming increasingly important for a robot to be aware of the intentions, expectations, and/or planned actions of these actors with respect to the robot. One way of determining the intentions, expectations, and/or planned actions of an actor involves determining a pose of the actor. The pose of the actor may be defined at least in part using a plurality of keypoints that represent locations of a body of the actor. The plurality of keypoints may be interconnected to represent one or more limbs of the actor, and the relative spatial arrangement of the keypoints and/or limbs may define the pose of the actor. Additionally or alternatively, the plurality of keypoints, the plurality of limbs, and/or the pose of the actor may be determined as part of other tasks, such as gait analysis of the actor, among other possibilities.

It may be desirable to determine, for each respective keypoint of the plurality of keypoints, a corresponding 3D position of the keypoint (e.g., in a reference frame of the robot and/or a world reference frame) based on sensor data representing the actor, including image and depth data. Representing the positions of the keypoints in 3D may provide more spatial information than representing the positions of the keypoints in 2D, and may thus provide more accurate and/or informative pose information. However, existing techniques for determining the 3D positions of the keypoints result in physically implausible poses, incomplete poses, and/or jittery poses. Further, the absence of accurate 3D keypoint training data means that it is difficult and/or infeasible to train machine learning models to determine the 3D positions of keypoints based on, for example, red-green-blue-depth (RGBD) images.

Accordingly, the 3D positions of keypoints may be determined by formulating the position determination operations as an optimization task. The optimization task may involve using a loss function (which may alternatively be referred to as an optimization function) to quantify (i) a spatial consistency between the 3D positions of keypoints and the sensor data and/or (ii) a temporal consistency between 3D positions determined over time. The optimization task may be executed by a keypoint position system that is configured to use the loss function to iteratively refine the 3D positions generated thereby. The keypoint position system may determine initial 3D keypoint positions that provide an intermediate estimate of the physical positions of the plurality of keypoints, and may iteratively refine the initial 3D keypoint positions to determine final 3D keypoint positions for a given sensor data frame. The keypoint position system may also include one or more constraints that, for example, facilitate determination of physically plausible keypoint positions. Thus, the keypoint position system may be configured to output 3D keypoint positions that (i) reduce or minimize a loss value generated by the loss function and (ii) satisfy zero or more of the constraints.

To quantify the spatial consistency, the loss function may include a depth loss term that may be based on a product of visibility values and depth field values determined for the keypoints, with the visibility values operating as weights for the depth field values. The visibility values may indicate the extent to which the keypoints are visible within the sensor data. The depth field values may indicate distances between the initial 3D positions and corresponding reference 3D positions within the depth data. The corresponding 3D reference position of each keypoint may indicate the position of one or more nearest neighbors of the initial 3D position of the keypoint, where the nearest neighbors are selected from the depth data. The depth loss term may thus indicate how closely the initial 3D positions track the depth information present in the depth data.

To quantify the temporal consistency, the loss function may also include a smoothness loss term that may be based on 3D position difference values determined for the keypoints. The 3D position difference values may represent distances between the initial 3D positions and either (i) the preceding 3D positions or (ii) projected 3D positions that represent a projection of the preceding 3D positions from the preceding time step to the current time step according to a motion pattern observed over time. The smoothness loss term may thus cause the 3D keypoint positions generated by the keypoint position system to change smoothly over time, thus reducing apparent jitter and/or noise.

The keypoint position system may also include a pixel position difference constraint and/or a limb length constraint. The pixel position constraint may direct the keypoint position system to generate 3D keypoint positions that, when projected into a reference frame of the image data, each fall within a threshold pixel difference of corresponding 2D keypoint detections within the image data. The limb length constraint may direct the keypoint position system to generate 3D keypoint positions that form limbs with physically plausible lengths. Specifically, the limb length constraint may indicate that each respective limb is to have a corresponding length that is greater than or equal to a minimum length associated with the respective limb and less than or equal to a maximum length associated with the respective limb. In some implementations, the limb length constraint and/or the pixel position constraint may instead be formulated as additional terms of the loss function.

In some implementations, the pose represented by a final set of 3D keypoint positions generated by the keypoint position system may be used to determine an extent or level of engagement of an actor with a robot. For example, based on the pose represented by the final set of 3D keypoint positions, the robot may determine whether a given actor intends to interact with the robot (e.g., an engaged state), intends to ignore the robot (e.g., a disengaged state), or is curious about the robot but not yet committed to an interaction therewith (e.g., a borderline state), among other possibilities. Based on this information, the robot may be able to develop a course of action to take with respect to the actor. For example, the robot may initiate and/or maintain interactions with engaged actors, and leave disengaged actors alone.

## II. Example Robotic Systems

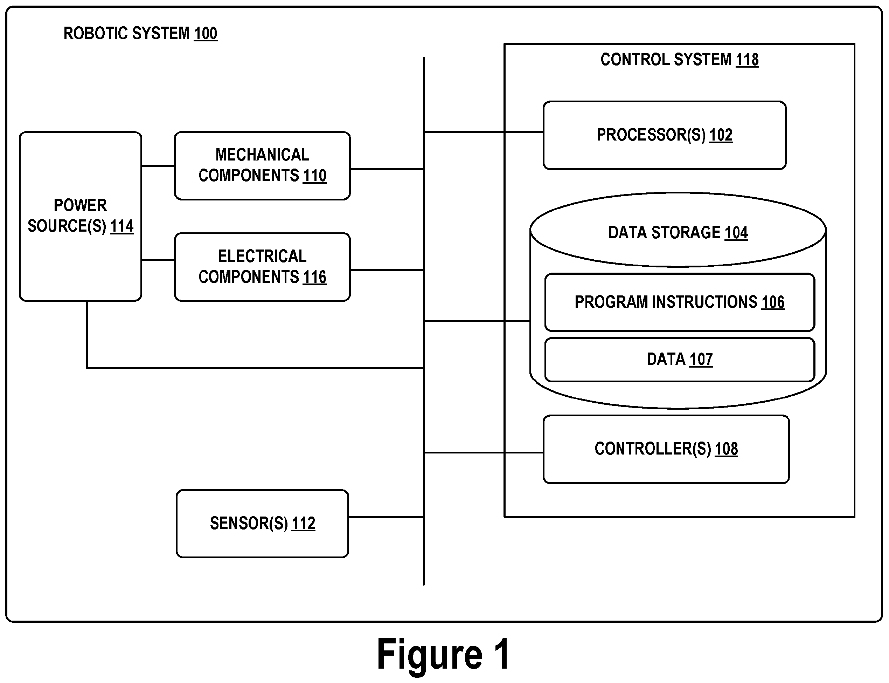

Figure 1 illustrates an example configuration of a robotic system that may be used in connection with the implementations described herein. Robotic system 100 may be configured to operate autonomously, semi-autonomously, or using directions provided by user(s). Robotic system 100 may be implemented in various forms, such as a robotic arm, industrial robot, or some other arrangement. Some example implementations involve a robotic system 100 engineered to be low cost at scale and designed to support a variety of tasks. Robotic system 100 may be designed to be capable of operating around people. Robotic system 100 may also be optimized for machine learning. Throughout this description, robotic system 100 may also be referred to as a robot, robotic device, or mobile robot, among other designations.

As shown in Figure 1, robotic system 100 may include processor(s) 102, data storage 104, and controller(s) 108, which together may be part of control system 118. Robotic system 100 may also include sensor(s) 112, power source(s) 114, mechanical components 110, and electrical components 116. Nonetheless, robotic system 100 is shown for illustrative purposes, and may include more or fewer components. The various components of robotic system 100 may be connected in any manner, including wired or wireless connections. Further, in some examples, components of robotic system 100 may be distributed among multiple physical entities rather than a single physical entity. Other example illustrations of robotic system 100 may exist as well.

Processor(s) 102 may operate as one or more general-purpose hardware processors or special purpose hardware processors (e.g., digital signal processors, application specific integrated circuits, etc.). Processor(s) 102 may be configured to execute computer-readable program instructions 106, and manipulate data 107, both of which are stored in data storage 104. Processor(s) 102 may also directly or indirectly interact with other components of robotic system 100, such as sensor(s) 112, power source(s) 114, mechanical components 110, or electrical components 116.

Data storage 104 may be one or more types of hardware memory. For example, data storage 104 may include or take the form of one or more computer-readable storage media that can be read or accessed by processor(s) 102. The one or more computer-readable storage media can include volatile or non-volatile storage components, such as optical, magnetic, organic, or another type of memory or storage, which can be integrated in whole or in part with processor(s) 102. In some implementations, data storage 104 can be a single physical device. In other implementations, data storage 104 can be implemented using two or more physical devices, which may communicate with one another via wired or wireless communication. As noted previously, data storage 104 may include the computer-readable program instructions 106 and data 107. Data 107 may be any type of data, such as configuration data, sensor data, or diagnostic data, among other possibilities.

Controller 108 may include one or more electrical circuits, units of digital logic, computer chips, or microprocessors that are configured to (perhaps among other tasks), interface between any combination of mechanical components 110, sensor(s) 112, power source(s) 114, electrical components 116, control system 118, or a user of robotic system 100. In some implementations, controller 108 may be a purpose-built embedded device for performing specific operations with one or more subsystems of the robotic system 100.

Control system 118 may monitor and physically change the operating conditions of robotic system 100. In doing so, control system 118 may serve as a link between portions of robotic system 100, such as between mechanical components 110 or electrical components 116. In some instances, control system 118 may serve as an interface between robotic system 100 and another computing device. Further, control system 118 may serve as an interface between robotic system 100 and a user. In some instances, control system 118 may include various components for communicating with robotic system 100, including a joystick, buttons, or ports, etc. The example interfaces and communications noted above may be implemented via a wired or wireless connection, or both. Control system 118 may perform other operations for robotic system 100 as well.

During operation, control system 118 may communicate with other systems of robotic system 100 via wired or wireless connections, and may further be configured to communicate with one or more users of the robot. As one possible illustration, control system 118 may receive an input (e.g., from a user or from another robot) indicating an instruction to perform a requested task, such as to pick up and move an object from one location to another location. Based on this input, control system 118 may perform operations to cause the robotic system 100 to make a sequence of movements to perform the requested task. As another illustration, a control system may receive an input indicating an instruction to move to a requested location. In response, control system 118 (perhaps with the assistance of other components or systems) may determine a direction and speed to move robotic system 100 through an environment en route to the requested location.

Operations of control system 118 may be carried out by processor(s) 102. Alternatively, these operations may be carried out by controller(s) 108, or a combination of processor(s) 102 and controller(s) 108. In some implementations, control system 118 may partially or wholly reside on a device other than robotic system 100, and therefore may at least in part control robotic system 100 remotely.

Mechanical components 110 represent hardware of robotic system 100 that may enable robotic system 100 to perform physical operations. As a few examples, robotic system 100 may include one or more physical members, such as an arm, an end effector, a head, a neck, a torso, a base, and wheels. The physical members or other parts of robotic system 100 may further include actuators arranged to move the physical members in relation to one another. Robotic system 100 may also include one or more structured bodies for housing control system 118 or other components, and may further include other types of mechanical components. The particular mechanical components 110 used in a given robot may vary based on the design of the robot, and may also be based on the operations or tasks the robot may be configured to perform.

In some examples, mechanical components 110 may include one or more removable components. Robotic system 100 may be configured to add or remove such removable components, which may involve assistance from a user or another robot. For example, robotic system 100 may be configured with removable end effectors or digits that can be replaced or changed as needed or desired. In some implementations, robotic system 100 may include one or more removable or replaceable battery units, control systems, power systems, bumpers, or sensors. Other types of removable components may be included within some implementations.

Robotic system 100 may include sensor(s) 112 arranged to sense aspects of robotic system 100. Sensor(s) 112 may include one or more force sensors, torque sensors, velocity sensors, acceleration sensors, position sensors, proximity sensors, motion sensors, location sensors, load sensors, temperature sensors, touch sensors, depth sensors, ultrasonic range sensors, infrared sensors, object sensors, or cameras, among other possibilities. Within some examples, robotic system 100 may be configured to receive sensor data from sensors that are physically separated from the robot (e.g., sensors that are positioned on other robots or located within the environment in which the robot is operating).

Sensor(s) 112 may provide sensor data to processor(s) 102 (perhaps by way of data 107) to allow for interaction of robotic system 100 with its environment, as well as monitoring of the operation of robotic system 100. The sensor data may be used in evaluation of various factors for activation, movement, and deactivation of mechanical components 110 and electrical components 116 by control system 118. For example, sensor(s) 112 may capture data corresponding to the terrain of the environment or location of nearby objects, which may assist with environment recognition and navigation.

In some examples, sensor(s) 112 may include RADAR (e.g., for long-range object detection, distance determination, or speed determination), LIDAR (e.g., for short-range object detection, distance determination, or speed determination), SONAR (e.g., for underwater object detection, distance determination, or speed determination), VICON® (e.g., for motion capture), one or more cameras (e.g., stereoscopic cameras for 3D vision), a global positioning system (GPS) transceiver, or other sensors for capturing information of the environment in which robotic system 100 is operating. Sensor(s) 112 may monitor the environment in real time, and detect obstacles, elements of the terrain, weather conditions, temperature, or other aspects of the environment. In another example, sensor(s) 112 may capture data corresponding to one or more characteristics of a target or identified object, such as a size, shape, profile, structure, or orientation of the object.

Further, robotic system 100 may include sensor(s) 112 configured to receive information indicative of the state of robotic system 100, including sensor(s) 112 that may monitor the state of the various components of robotic system 100. Sensor(s) 112 may measure activity of systems of robotic system 100 and receive information based on the operation of the various features of robotic system 100, such as the operation of an extendable arm, an end effector, or other mechanical or electrical features of robotic system 100. The data provided by sensor(s) 112 may enable control system 118 to determine errors in operation as well as monitor overall operation of components of robotic system 100.

As an example, robotic system 100 may use force/torque sensors to measure load on various components of robotic system 100. In some implementations, robotic system 100 may include one or more force/torque sensors on an arm or end effector to measure the load on the actuators that move one or more members of the arm or end effector. In some examples, the robotic system 100 may include a force/torque sensor at or near the wrist or end effector, but not at or near other joints of a robotic arm. In further examples, robotic system 100 may use one or more position sensors to sense the position of the actuators of the robotic system. For instance, such position sensors may sense states of extension, retraction, positioning, or rotation of the actuators on an arm or end effector.

As another example, sensor(s) 112 may include one or more velocity or acceleration sensors. For instance, sensor(s) 112 may include an inertial measurement unit (IMU). The IMU may sense velocity and acceleration in the world frame, with respect to the gravity vector. The velocity and acceleration sensed by the IMU may then be translated to that of robotic system 100 based on the location of the IMU in robotic system 100 and the kinematics of robotic system 100.

Robotic system 100 may include other types of sensors not explicitly discussed herein. Additionally or alternatively, the robotic system may use particular sensors for purposes not enumerated herein.

Robotic system 100 may also include one or more power source(s) 114 configured to supply power to various components of robotic system 100. Among other possible power systems, robotic system 100 may include a hydraulic system, electrical system, batteries, or other types of power systems. As an example illustration, robotic system 100 may include one or more batteries configured to provide charge to components of robotic system 100. Some of mechanical components 110 or electrical components 116 may each connect to a different power source, may be powered by the same power source, or be powered by multiple power sources.

Any type of power source may be used to power robotic system 100, such as electrical power or a gasoline engine. Additionally or alternatively, robotic system 100 may include a hydraulic system configured to provide power to mechanical components 110 using fluid power. Components of robotic system 100 may operate based on hydraulic fluid being transmitted throughout the hydraulic system to various hydraulic motors and hydraulic cylinders, for example. The hydraulic system may transfer hydraulic power by way of pressurized hydraulic fluid through tubes, flexible hoses, or other links between components of robotic system 100. Power source(s) 114 may charge using various types of charging, such as wired connections to an outside power source, wireless charging, combustion, or other examples.

Electrical components 116 may include various mechanisms capable of processing, transferring, or providing electrical charge or electric signals. Among possible examples, electrical components 116 may include electrical wires, circuitry, or wireless communication transmitters and receivers to enable operations of robotic system 100. Electrical components 116 may interwork with mechanical components 110 to enable robotic system 100 to perform various operations. Electrical components 116 may be configured to provide power from power source(s) 114 to the various mechanical components 110, for example. Further, robotic system 100 may include electric motors. Other examples of electrical components 116 may exist as well.

Robotic system 100 may include a body, which may connect to or house appendages and components of the robotic system. As such, the structure of the body may vary within examples and may further depend on particular operations that a given robot may have been designed to perform. For example, a robot developed to carry heavy loads may have a wide body that enables placement of the load. Similarly, a robot designed to operate in tight spaces may have a relatively tall, narrow body. Further, the body or the other components may be developed using various types of materials, such as metals or plastics. Within other examples, a robot may have a body with a different structure or made of various types of materials.

The body or the other components may include or carry sensor(s) 112. These sensors may be positioned in various locations on the robotic system 100, such as on a body, a head, a neck, a base, a torso, an arm, or an end effector, among other examples.

Robotic system 100 may be configured to carry a load, such as a type of cargo that is to be transported. In some examples, the load may be placed by the robotic system 100 into a bin or other container attached to the robotic system 100. The load may also represent external batteries or other types of power sources (e.g., solar panels) that the robotic system 100 may utilize. Carrying the load represents one example use for which the robotic system 100 may be configured, but the robotic system 100 may be configured to perform other operations as well.

As noted above, robotic system 100 may include various types of appendages, wheels, end effectors, gripping devices and so on. In some examples, robotic system 100 may include a mobile base with wheels, treads, or some other form of locomotion. Additionally, robotic system 100 may include a robotic arm or some other form of robotic manipulator. In the case of a mobile base, the base may be considered as one of mechanical components 110 and may include wheels, powered by one or more of actuators, which allow for mobility of a robotic arm in addition to the rest of the body.

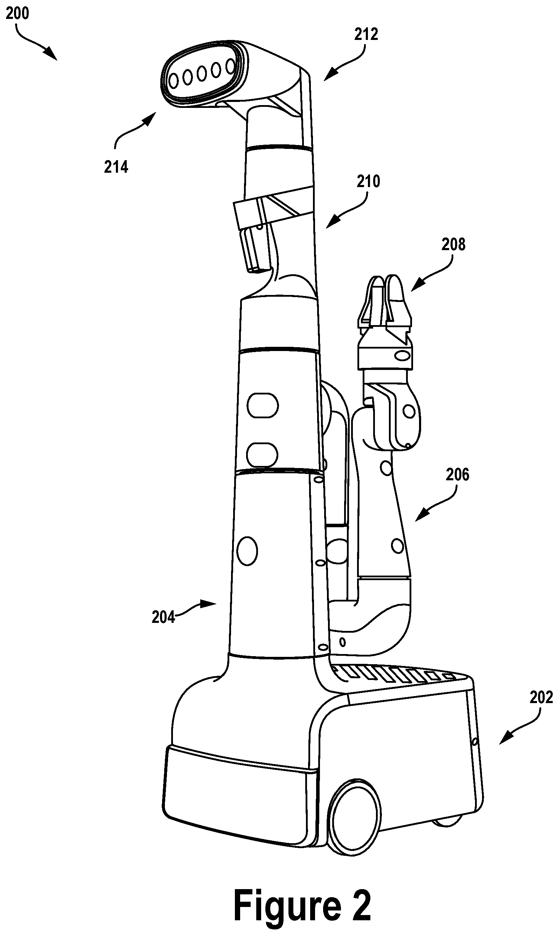

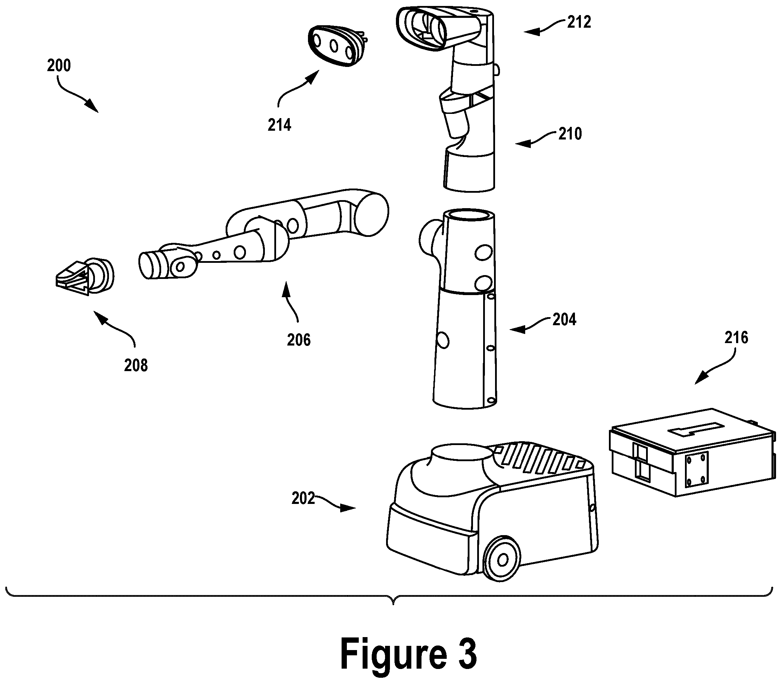

Figure 2 illustrates a mobile robot, in accordance with example embodiments. Figure 3 illustrates an exploded view of the mobile robot, in accordance with example embodiments. More specifically, robot 200 may include mobile base 202, midsection 204, arm 206, end-of-arm system (EOAS) 208, mast 210, perception housing 212, and perception suite 214. Robot 200 may also include compute box 216 stored within mobile base 202.

Mobile base 202 includes two drive wheels positioned at a front end of robot 200 in order to provide locomotion to robot 200. Mobile base 202 also includes additional casters (not shown) to facilitate motion of mobile base 202 over a ground surface. Mobile base 202 may have a modular architecture that allows compute box 216 to be easily removed. Compute box 216 may serve as a removable control system for robot 200 (rather than a mechanically integrated control system). After removing external shells, compute box 216 can be easily removed and/or replaced. Mobile base 202 may also be designed to allow for additional modularity. For example, mobile base 202 may also be designed so that a power system, a battery, and/or external bumpers can all be easily removed and/or replaced.

Midsection 204 may be attached to mobile base 202 at a front end of mobile base 202. Midsection 204 includes a mounting column which is fixed to mobile base 202. Midsection 204 additionally includes a rotational joint for arm 206. More specifically, Midsection 204 includes the first two degrees of freedom for arm 206 (a shoulder yaw J0 joint and a shoulder pitch J1 joint). The mounting column and the shoulder yaw J0 joint may form a portion of a stacked tower at the front of mobile base 202. The mounting column and the shoulder yaw J0 joint may be coaxial. The length of the mounting column of midsection 204 may be chosen to provide arm 206 with sufficient height to perform manipulation tasks at commonly encountered height levels (e.g., coffee table top and/or counter top levels). The length of the mounting column of midsection 204 may also allow the shoulder pitch J1 joint to rotate arm 206 over mobile base 202 without contacting mobile base 202.

Arm 206 may be a 7DOF robotic arm when connected to midsection 204. As noted, the first two DOFs of arm 206 may be included in midsection 204. The remaining five DOFs may be included in a standalone section of arm 206 as illustrated in Figures 2 and 3. Arm 206 may be made up of plastic monolithic link structures. Inside arm 206 may be housed standalone actuator modules, local motor drivers, and thru bore cabling.

EOAS 208 may be an end effector at the end of arm 206. EOAS 208 may allow robot 200 to manipulate objects in the environment. As shown in Figures 2 and 3, EOAS 208 may be a gripper, such as an underactuated pinch gripper. The gripper may include one or more contact sensors such as force/torque sensors and/or non-contact sensors such as one or more cameras to facilitate object detection and gripper control. EOAS 208 may also be a different type of gripper such as a suction gripper or a different type of tool such as a drill or a brush. EOAS 208 may also be swappable or include swappable components such as gripper digits.

Mast 210 may be a relatively long, narrow component between the shoulder yaw J0 joint for arm 206 and perception housing 212. Mast 210 may be part of the stacked tower at the front of mobile base 202. Mast 210 may be fixed relative to mobile base 202. Mast 210 may be coaxial with midsection 204. The length of mast 210 may facilitate perception by perception suite 214 of objects being manipulated by EOAS 208. Mast 210 may have a length such that when the shoulder pitch J1 joint is rotated vertical up, a topmost point of a bicep of arm 206 is approximately aligned with a top of mast 210. The length of mast 210 may then be sufficient to prevent a collision between perception housing 212 and arm 206 when the shoulder pitch J1 joint is rotated vertical up.

As shown in Figures 2 and 3, mast 210 may include a 3D lidar sensor configured to collect depth information about the environment. The 3D lidar sensor may be coupled to a carved-out portion of mast 210 and fixed at a downward angle. The lidar position may be optimized for localization, navigation, and for front cliff detection.

Perception housing 212 may include at least one sensor making up perception suite 214. Perception housing 212 may be connected to a pan/tilt control to allow for reorienting of perception housing 212 (e.g., to view objects being manipulated by EOAS 208). Perception housing 212 may be a part of the stacked tower fixed to mobile base 202. A rear portion of perception housing 212 may be coaxial with mast 210.

Perception suite 214 may include a suite of sensors configured to collect sensor data representative of the environment of robot 200. Perception suite 214 may include an infrared(IR)-assisted stereo depth sensor. Perception suite 214 may additionally include a wide-angled red-green-blue (RGB) camera for human-robot interaction and context information. Perception suite 214 may additionally include a high resolution RGB camera for object classification. A face light ring surrounding perception suite 214 may also be included for improved human-robot interaction and scene illumination. In some examples, perception suite 214 may also include a projector configured to project images and/or video into the environment.

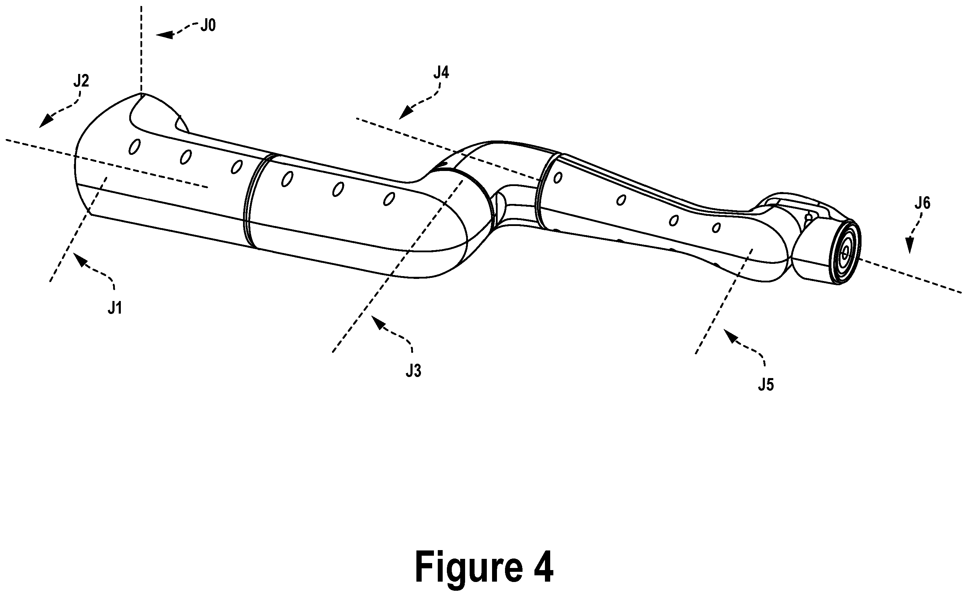

Figure 4 illustrates a robotic arm, in accordance with example embodiments. The robotic arm includes 7 DOFs: a shoulder yaw J0 joint, a shoulder pitch J1 joint, a bicep roll J2 joint, an elbow pitch J3 joint, a forearm roll J4 joint, a wrist pitch J5 joint, and wrist roll J6 joint. Each of the joints may be coupled to one or more actuators. The actuators coupled to the joints may be operable to cause movement of links down the kinematic chain (as well as any end effector attached to the robot arm).

The shoulder yaw J0 joint allows the robot arm to rotate toward the front and toward the back of the robot. One beneficial use of this motion is to allow the robot to pick up an object in front of the robot and quickly place the object on the rear section of the robot (as well as the reverse motion). Another beneficial use of this motion is to quickly move the robot arm from a stowed configuration behind the robot to an active position in front of the robot (as well as the reverse motion).

The shoulder pitch J1 joint allows the robot to lift the robot arm (e.g., so that the bicep is up to perception suite level on the robot) and to lower the robot arm (e.g., so that the bicep is just above the mobile base). This motion is beneficial to allow the robot to efficiently perform manipulation operations (e.g., top grasps and side grasps) at different target height levels in the environment. For instance, the shoulder pitch J1 joint may be rotated to a vertical up position to allow the robot to easily manipulate objects on a table in the environment. The shoulder pitch J1 joint may be rotated to a vertical down position to allow the robot to easily manipulate objects on a ground surface in the environment.

The bicep roll J2 joint allows the robot to rotate the bicep to move the elbow and forearm relative to the bicep. This motion may be particularly beneficial for facilitating a clear view of the EOAS by the robot's perception suite. By rotating the bicep roll J2 joint, the robot may kick out the elbow and forearm to improve line of sight to an object held in a gripper of the robot.

Moving down the kinematic chain, alternating pitch and roll joints (a shoulder pitch J1 joint, a bicep roll J2 joint, an elbow pitch J3 joint, a forearm roll J4 joint, a wrist pitch J5 joint, and wrist roll J6 joint) are provided to improve the manipulability of the robotic arm. The axes of the wrist pitch J5 joint, the wrist roll J6 joint, and the forearm roll J4 joint are intersecting for reduced arm motion to reorient objects. The wrist roll J6 point is provided instead of two pitch joints in the wrist in order to improve object rotation.

In some examples, a robotic arm such as the one illustrated in Figure 4 may be capable of operating in a teach mode. In particular, teach mode may be an operating mode of the robotic arm that allows a user to physically interact with and guide robotic arm towards carrying out and recording various movements. In a teaching mode, an external force is applied (e.g., by the user) to the robotic arm based on a teaching input that is intended to teach the robot regarding how to carry out a specific task. The robotic arm may thus obtain data regarding how to carry out the specific task based on instructions and guidance from the user. Such data may relate to a plurality of configurations of mechanical components, joint position data, velocity data, acceleration data, torque data, force data, and power data, among other possibilities.

During teach mode the user may grasp onto the EOAS or wrist in some examples or onto any part of robotic arm in other examples, and provide an external force by physically moving robotic arm. In particular, the user may guide the robotic arm towards grasping onto an object and then moving the object from a first location to a second location. As the user guides the robotic arm during teach mode, the robot may obtain and record data related to the movement such that the robotic arm may be configured to independently carry out the task at a future time during independent operation (e.g., when the robotic arm operates independently outside of teach mode). In some examples, external forces may also be applied by other entities in the physical workspace such as by other objects, machines, or robotic systems, among other possibilities.

## III. Example Keypoints

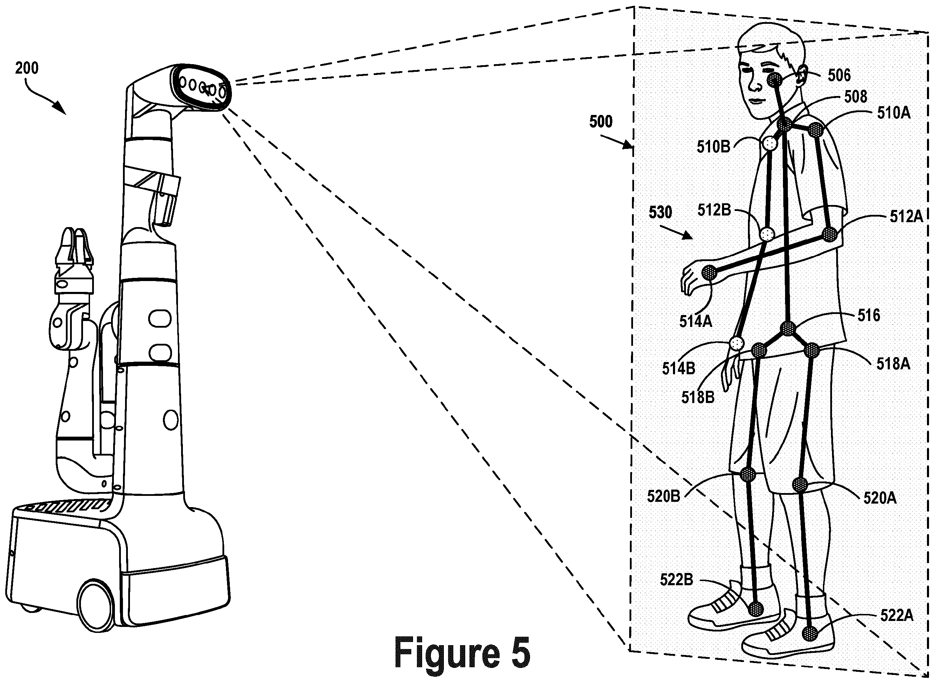

Figure 5 illustrates robot 200 capturing sensor data that represents actor 530, as indicated by field of view 500. For example, the sensor data may be captured by one or more sensors within perception suite 214. The sensor data may include image data and/or depth data, among other possibilities. The image data may include RGB images and/or grayscale images, among other possibilities. The depth data may include stereoscopic image data, time-of-flight image data, RADAR data, and/or LIDAR data, among other possibilities. The pose of perception suite 214 may be adjusted over time to capture sensor data regarding a specific portion of actor 530, increase the portion of actor 530 represented by the sensor data, and/or follow actor 530 as the position thereof changes over time. In some implementations, the sensor data may be obtained by sensors that are not located on robot 200, such as sensors located at fixed locations within an environment.

The captured sensor data may be used (e.g., by a control system of robot 200, such as control system 118) to determine 3D locations of a plurality of keypoints. When actor 530 is a human, the plurality of keypoints may represent predetermined locations on a human body, as shown in Figure 5. These predetermined body locations may include head keypoint 506, neck keypoint 508, shoulder keypoints 510A and 510B, elbow keypoints 512A and 512B, hand keypoints 514A and 514B, pelvic keypoint 516, hip keypoints 518A and 518B, knee keypoints 520A and 520B, and foot keypoints 522A and 522B (i.e., keypoints 506-522B). Thus, at least a subset of keypoints 506-522B may include joints of the human body.

In some implementations, some of keypoints 506-522B may be omitted and/or other keypoints may be added. For example, pelvic keypoint 516 may be omitted. In another example, head keypoint 506 may be further subdivided into eye keypoints, a nose keypoint, a mouth keypoint, and/or ear keypoints, among other possibilities. Keypoints 506-522B are shown interconnected to form a virtual human skeleton. Further, keypoints 510B, 512B, and 514B are drawn with a different pattern than the other keypoints to indicate that keypoints 510B, 512B, and 514B are not visible (i.e., are hidden/occluded) when actor 530 is viewed from the perspective shown in Figure 5.

Alternatively, in some implementations, the plurality of keypoints may represent predetermined locations on a robotic body, or predetermined locations on a body of an actor of a species other than human. Thus, the number and positioning of the keypoints may vary according to the type of actor. Further, keypoints 506-522B may alternatively be referred to as nodes. In general, the plurality of keypoints may be predetermined body locations that the system is configured to attempt to find or identify based on the captured sensor data.

In some implementations, keypoints 506-522B (e.g., the actor pose represented thereby) may be used to determine an extent of engagement between actor 530 and robot 200. The extent of engagement may be a measure of willingness and/or desire by actor 530 to interact with robot 200. For example, a high extent of engagement may be associated with a high probability that actor 530 will interact with robot 200, whereas a low extent of engagement may be associated with a high probability that actor 530 will ignore robot 200. The interaction may involve a number of different operations, including hand-over of an object between robot 200 and actor 530, cooperation between robot 200 and actor 530 on a particular task, and/or communication between robot 200 and actor 530, among other possible operations.

**IV. Example Keypoint position system**

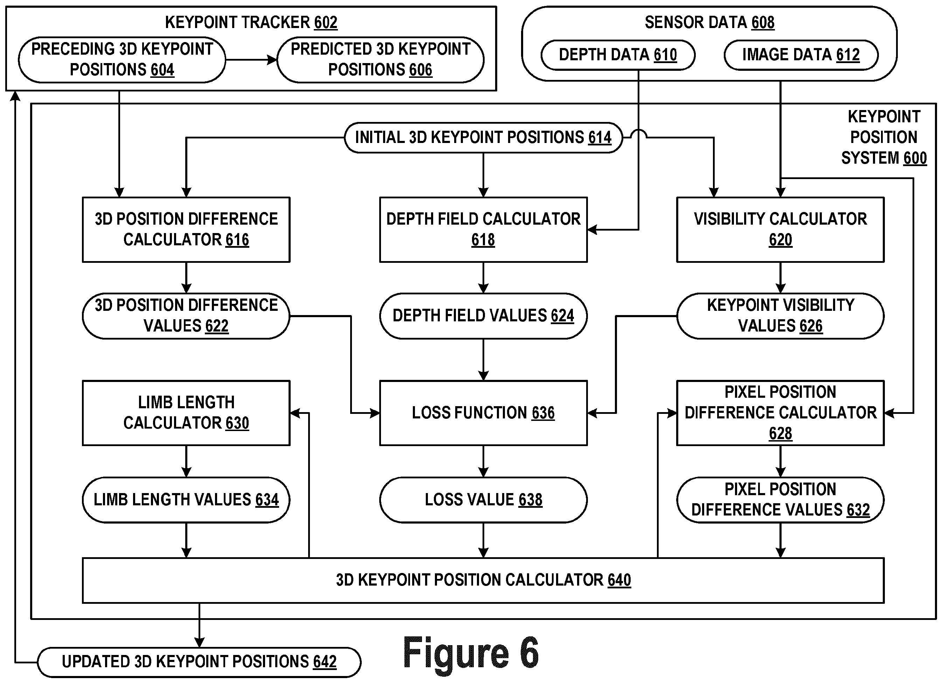

Figure 6 illustrates an example keypoint position system 600. Keypoint position system 600 may be configured to determine updated 3D keypoint positions 642 based on sensor data 608 and, in some cases, preceding 3D keypoint positions 604 and/or predicted 3D keypoint positions 606 determined by keypoint tracker 602. Keypoint position system 600 may include 3D position difference calculator 616, depth field calculator 618, visibility calculator 620, pixel position difference calculator 628, limb length calculator 630, loss function 636, and 3D keypoint position calculator 640.

Sensor data 608 may include depth data 610 and image data 612, each of which may provide a representation of one or more actors, such as actor 530. For example, sensor data 608 may correspond to field of view 500 of Figure 5. Sensor data 608 may include a plurality of depth data frames and image data frames corresponding to a plurality of different time points, with depth data 610 and image data 612 corresponding to time T, preceding sensor data corresponding to time T-1, subsequent sensor data corresponding to time T+1, and so on.

Keypoint tracker 602 may be configured to track and/or predict, for each respective keypoint of a plurality of keypoints associated with an actor, the corresponding 3D positions of the respective keypoint over time. For example, keypoint tracker 602 may be configured to determine predicted 3D keypoint positions 606 corresponding to time T based on (i) preceding 3D keypoint positions 604 corresponding to time T-1 and (ii) a motion pattern of the keypoints over a plurality of preceding time steps (e.g., from T-2 to T-1). Preceding 3D keypoint positions 604 may represent a final output of keypoint position system 600 for time T-1, while predicted 3D keypoint positions 606 may represent a projection of preceding 3D keypoint positions 604 from time T-1 to time T.

Keypoint position system 600 may be configured to determine one or more instances of updated 3D keypoint positions 642 corresponding to time T. For example, final 3D keypoint position values for time T may be determined based on a plurality of iterations of keypoint position system 600. At each iteration of keypoint position system 600 aside from the first iteration, initial 3D keypoint positions 614 may be assigned the values of updated 3D keypoint positions 642 from a preceding iteration, resulting in incremental refinement of the accuracy of updated 3D keypoint positions 642. For example, at iteration I, initial 3D keypoint positions 614 may be assigned the values of updated 3D keypoint positions 642 resulting from iteration I-1, and the values of updated 3D keypoint positions 642 resulting from iteration I may be more accurate than the values of updated 3D keypoint positions 642 resulting from iteration I-1. The output of a final iteration of keypoint position system 600 may be selected as the final set of values for updated 3D keypoint positions 642 for time T. The final set of values for updated 3D keypoint positions 642 for time T may be assigned to the preceding 3D keypoint positions for time T+1.

Initial 3D keypoint positions 614 may include, for each respective keypoint of the plurality of keypoints, a corresponding initial 3D position of the respective keypoint. Prior to a first iteration of keypoint position system 600 for a given time point, initial 3D keypoint positions 614 may be initialized with the values of preceding 3D keypoint positions 604, the values of predicted 3D keypoint positions 606, and/or randomly selected 3D keypoint values. Updated 3D keypoint positions 642 may include, for each respective keypoint of the plurality of keypoints, a corresponding updated 3D position of the respective keypoint. Initial 3D keypoint positions 614 and/or updated 3D keypoint positions 642 may be represented in a reference frame of a robotic device (e.g., robot 200), a fixed world reference frame, and/or another reference frame.

Visibility calculator 620 may be configured to determine keypoint visibility values 626 based on sensor data 608 and initial 3D keypoint positions 614. Keypoint visibility values 626 may include, for each respective keypoint of the plurality of keypoints, a corresponding visibility value that indicates an extent to which the respective keypoint is visible in sensor data 608. For example, the corresponding visibility value may represent a likelihood that the respective keypoint is unobstructed and/or non-occluded in sensor data 608.

In some implementations, the corresponding visibility value may be binary valued, and may have a first value (e.g., 1) when at least a threshold number of visibility conditions are met or a second value (e.g., 0) when fewer than the threshold number of visibility conditions are met. In other implementations, the corresponding visibility value may be continuously valued, and the value thereof may be proportional to a number of visibility conditions that are met.

For example, a first visibility condition may be based on a corresponding confidence value associated with a detection of the respective keypoint in image data 612. Specifically, when the corresponding confidence value exceeds a threshold confidence value, the first visibility condition may be considered to have been met. That is, the first visibility condition may indicate whether the respective keypoint has been detected within image data 612 with sufficient confidence to be considered visible. Keypoints may be detected within image data 612 using, for example, a keypoint detection model that may include a machine learning model (e.g., an artificial neural network) that has been trained to perform keypoint detection.

A second visibility condition may be based on a corresponding position at which the respective keypoint has been detected relative to a mask associated with the actor. The mask may represent a portion of image data 612 and/or depth data 610 determined to be occupied by the actor. The mask may be determined, for example, by processing image data 612 and/or depth data 610 using a mask detection model that may include a machine learning model that has been trained to perform actor mask detection. When the respective keypoint is detected inside of the mask or within a threshold distance of an outer boundary of the mask, the second visibility condition may be considered to have been met. That is, the second visibility condition may indicate whether detection of individual keypoints is consistent with detection of the actor as a whole, as represented by the mask.

A third visibility condition may be based on a comparison of (i) an estimated depth value of the respective keypoint as represented by initial 3D keypoint positions 614 to (ii) a measured depth value associated with the respective keypoint in depth data 610. The measured depth value may be selected for the respective keypoint based on a position within image data 612 at which the respective keypoint has been detected. For example, a value of depth data 610 at a position that spatially corresponds to a detection of the respective keypoint within image data 612 may be selected as the measured depth value. When the estimated depth value of the respective keypoint is smaller than the measured depth value (i.e., the keypoint is closer to the sensor than the corresponding depth measurement indicates), the third visibility condition may be considered to have been met. That is, the third visibility condition may indicate whether the respective keypoint is in front of or behind a feature of the environment represented by depth data 610. The respective keypoint may be likely to be occluded by the feature of the environment when the estimated depth value of the respective keypoint is greater than the measured depth value (i.e., when the keypoint is further away from the sensor than the feature of the environment).

Depth field calculator 618 may be configured to determine depth field values 624 based on depth data 610 and initial 3D keypoint positions 614. Depth field values 624 may include, for each respective keypoint of the plurality of keypoints, a corresponding depth field value that indicates a distance between the corresponding initial 3D position of the respective keypoint and a corresponding 3D reference position associated with the respective keypoint. The corresponding reference 3D position of the respective keypoint is based on at least one nearest neighbor, selected from depth data 610, of the respective keypoint when located at the corresponding initial 3D position.

In one example, the reference 3D position may be a 3D position of a single nearest neighbor, selected from depth data 610, of the respective keypoint when it is located at the corresponding initial 3D position. That is, the reference 3D position may correspond to a point in depth data 610 that is spatially closest to the initial 3D position of the respective keypoint. In another example, the reference 3D position may represent a center of mass of a predetermined number (e.g., n = 10) of nearest neighbors, selected from depth data 610, of the respective keypoint when it is located at the corresponding initial 3D position. That is, the reference 3D position may represent a spatial average of a predetermined number of points in depth data 610 that are spatially closest to the initial 3D position of the respective keypoint. Accordingly, the reference 3D position may represent one or more points in depth data 610 that are spatially closest to the initial 3D position of the respective keypoint, and thus likely to provide a measured/observed representation of the same portion of the actor as the estimated representation provided by the respective keypoint.

To identify, in depth data 610, the one or more nearest neighbors of the initial 3D position of the respective keypoint, depth field calculator is configured to calculate a corresponding plurality of difference values representing distances between the corresponding initial 3D position and a plurality of 3D points within depth data 610. Specifically, depth field calculator 618 is configured to determine, for each respective keypoint of the plurality of keypoints, a corresponding plurality of difference values, with each respective difference value of the corresponding plurality of difference values representing a distance between (i) the corresponding initial 3D position of the respective keypoint and (ii) the corresponding 3D position of each of a plurality of 3D points of the depth data. The one or more nearest neighbors of the respective keypoint are thus points in depth data 610 that are associated with corresponding one or more smallest difference values.

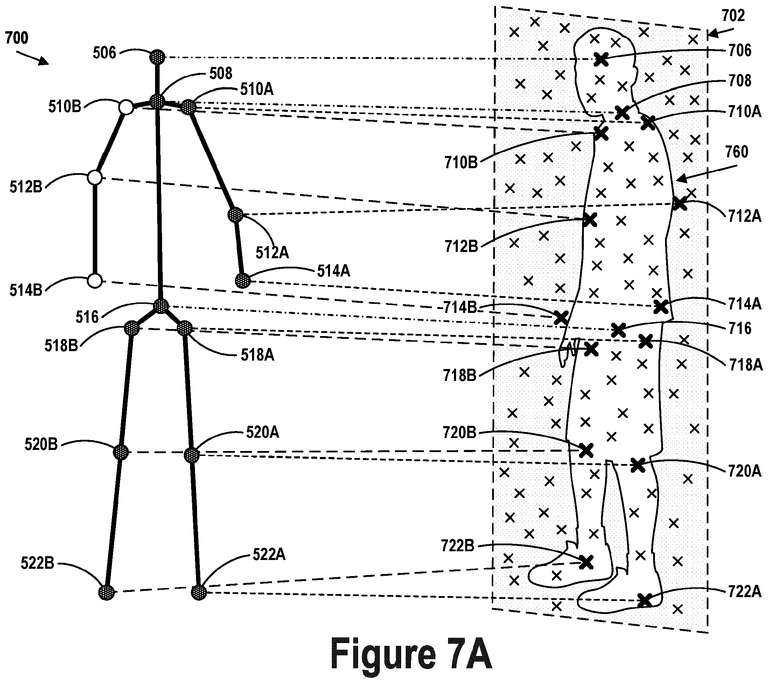

Figure 7A provides a graphical representation of depth field values 624. Specifically, pose 700 of actor 530 may be defined by a corresponding instance of initial 3D keypoint positions 614 for keypoints 506-522B. That is, pose 700 may include keypoints 506-522B located at initial 3D keypoint positions 614. Keypoints 510B, 512B, and 514B may be associated with respective visibility values below a threshold visibility value, and are thus indicated as white-filled circles, while all other keypoints may be associated with respective visibility values above the threshold visibility value, and are thus indicated with pattern-filled circles.

Depth data 702 provides an example of depth data 610, and may be represented as, for example, a point cloud. Each "x" in depth data 702 may represent a point in the environment for which a corresponding depth value has been determined and is represented by depth data 702. Mask 760 is shown superimposed on depth data 702 to provide a visual reference of the region of depth data 702 that is occupied by actor 530, although mask 760 might not be part of depth data 702. Pose 700 and depth data 702 are shown horizontally offset relative to one another for clarity of illustration. In practice, keypoints 506-522B and depth data 702 may be represented using the same reference frame, without any offset, to allow the initial 3D positions of keypoints 506-522B to be compared to positions of points in depth data 702.

Each of keypoints 506-522B is mapped to a corresponding reference point within depth data 702, where the corresponding reference point has a corresponding reference 3D position. In the example shown in Figure 7A, each reference point represents one point in depth data 702 that is a nearest neighbor of the corresponding keypoint. For example, reference point 706 is mapped to, and is thus a nearest neighbor of, keypoint 506. Similarly, reference point 708 is mapped to keypoint 508, reference point 710A is mapped to keypoint 510A, reference point 710B is mapped to keypoint 510B, reference point 712A is mapped to keypoint 512A, reference point 712B is mapped to keypoint 512B, reference point 714A is mapped to keypoint 514A, reference point 714B is mapped to keypoint 514B, reference point 716 is mapped to keypoint 516, reference point 718A is mapped to keypoint 518A, reference point 718B is mapped to keypoint 518B, reference point 720A is mapped to keypoint 520A, reference point 720B is mapped to keypoint 520B, reference point 722A is mapped to keypoint 522A, and reference point 722B is mapped to keypoint 522B.

Accordingly, the depth field value corresponding to a respective keypoint of keypoints 506-522B may be based on a distance between the initial 3D position of the respective keypoint and the 3D position of a corresponding reference point. The distance between the initial 3D position of the respective keypoint and the 3D position of the corresponding reference point may be represented by the line therebetween, minus the horizontal offset included in Figure 7A to provide visual clarity. For example, the depth field value corresponding to keypoint 506 may be based on a distance between (i) the initial 3D position of keypoint 506, as shown by pose 700, and (ii) the 3D position of reference point 706, as shown by depth data 702. The depth field value corresponding to keypoint 508 may be based on a distance between (i) the initial 3D position of keypoint 508, as shown by pose 700, and (ii) the 3D position of reference point 708, as shown by depth data 702, and so on.

In some cases, the corresponding reference point for a given keypoint may be selected independently of the positions of the corresponding reference point relative to mask 760. Thus, for example, reference point 714B of keypoint 514B is shown positioned outside of mask 760 and is selected as the reference point for keypoint 514B because it is spatially closes to the corresponding initial 3D position of keypoint 514B in pose 700, regardless of the positions of reference point 714B relative to mask 760. In other cases, the corresponding reference point for the given keypoint may be selected based on the positions of the corresponding reference point relative to mask 760. A point in depth data 702 may be selectable as a reference point if this point corresponds to a depth value in a region of depth data 702 that is spanned by mask 760. For example, when depth data 702 is a depth image and is spatially aligned with the image data, the depth value of a pixel of the depth image may be used to form a reference point if a corresponding pixel of the image data is inside of mask 760 determined based on the image data.

Turning back to Figure 6, 3D position difference calculator 616 may be configured to generate 3D position difference values 622 based on (i) initial 3D keypoint positions 614 and (ii) preceding 3D keypoint positions 604 or predicted 3D keypoint positions 606. 3D position difference values 622 may include, for each respective keypoint of the plurality of keypoints, a corresponding 3D position difference value. In one example, the corresponding 3D position difference value may indicate a distance between (i) the corresponding initial 3D position of the respective keypoint and (ii) a corresponding preceding 3D position of the respective keypoint as represented by preceding 3D keypoint positions 604. In another example, the corresponding 3D position difference value may indicate a distance between (i) the corresponding initial 3D position of the respective keypoint and (ii) a corresponding predicted 3D position of the respective keypoint as represented by predicted 3D keypoint positions 606.

Whether 3D position difference values 622 are calculated relative to preceding 3D keypoint positions 604 or predicted 3D keypoint positions 606 may be based on (i) whether keypoint tracker 602 is configured to generate predicted 3D keypoint positions 606, (ii) an accuracy of keypoint tracker 602, (iii) a length of a time interval between successive time steps for which 3D keypoint positions are determined, and/or (iv) a modifiable design choice, among other possibilities. For example, when the time interval between two successive time steps is relatively large, using predicted 3D keypoint positions 606 may be more accurate than using preceding 3D keypoint positions 604. When the time interval between two successive time steps is relatively small, a difference between preceding 3D keypoint positions 604 and predicted 3D keypoint positions 606 may thus also be relatively small, and either set of values may allow keypoint position system 600 to converge to a similar final set of 3D keypoint position values.

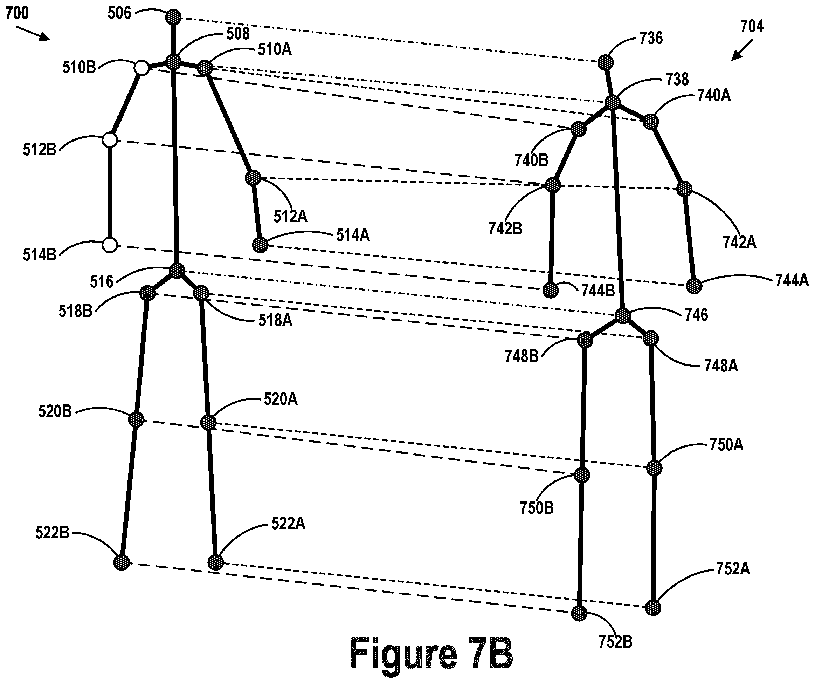

Figure 7B provides a graphical representation of 3D position difference values 622. Specifically, pose 704 of actor 530 may represent (i) preceding 3D keypoint positions 604 for keypoints 506-522B and/or (ii) predicted 3D keypoint positions 606 for keypoints 506-522B. In the context of Figure 7B, pose 704 may, for example, be assumed to represent predicted 3D keypoint positions 606 for keypoints 506-522B. Pose 700 is shown horizontally offset relative to pose 704 for clarity of illustration and, in practice, poses 700 and 704 may be represented using the same reference frame, without any offset, to allow the initial 3D positions of keypoints 506-522B to be compared to the predicted 3D positions of keypoints 506-522B.

As part of pose 704, keypoint 506 may be located at predicted 3D keypoint position 736, keypoint 508 may be located at predicted 3D keypoint position 738, keypoint 510A may be located at predicted 3D keypoint position 740A, keypoint 510B may be located at predicted 3D keypoint position 740B, keypoint 512A may be located at predicted 3D keypoint position 742A, keypoint 512B may be located at predicted 3D keypoint position 742B, keypoint 514A may be located at predicted 3D keypoint position 744A, keypoint 514B may be located at predicted 3D keypoint position 744B, keypoint 516 may be located at predicted 3D keypoint position 746, keypoint 518A may be located at predicted 3D keypoint position 748A, keypoint 518B may be located at predicted 3D keypoint position 748B, keypoint 520A may be located at predicted 3D keypoint position 750A, keypoint 520B may be located at predicted 3D keypoint position 750B, keypoint 522A may be located at predicted 3D keypoint position 752A, and keypoint 522B may be located at predicted 3D keypoint position 752B.

The 3D position difference value corresponding to a respective keypoint of keypoints 506-522B may be based on a distance between the initial 3D position of the respective keypoint and the predicted 3D position of the respective keypoint. The distance between the initial 3D position of the respective keypoint and the predicted 3D position of the respective keypoint may be represented by the line therebetween, minus the horizontal offset included in Figure 7B to provide visual clarity. For example, the 3D position difference value corresponding to keypoint 506 may be based on a distance between (i) the initial 3D position of keypoint 506, as shown by pose 700, and (ii) the predicted 3D position of keypoint 506, as shown by pose 704. The 3D position difference value corresponding to keypoint 508 may be based on a distance between (i) the initial 3D position of keypoint 508, as shown by pose 700, and (ii) the predicted 3D position of keypoint 508, as shown by pose 704, and so on.

Turning back to Figure 6, loss function 636 may be configured to generate loss value 638 based on keypoint visibility values 626, depth field values 624, and/or 3D position difference values 622. Loss value 638 may be actor-specific, rather than keypoint-specific, and may thus indicate how accurately initial 3D keypoint positions 614 represent the corresponding actor.

Loss function 636 may be expressed as $L_{POSE} = L_{DEPTH} + wL_{SMOOTHNESS} = \frac{1}{2}\sum_{i=1}^{N}(v_i * DF(p_i)^2 + w * \|d_i\|_2^2)$ , where the plurality of keypoints include $N$ key points, $v_i$ represents the visibility value of the *ith* keypoint as represented by keypoint visibility values 626, $p_i$ represents the corresponding initial 3D keypoint position of the *ith* keypoint as represented by initial 3D keypoint positions 614, $DF(p_i)$ represents the depth field value associated with the *ith* keypoint as represented by depth field values 624, $d_i$ represents the corresponding 3D position difference value of the *ith* keypoint as represented by 3D position difference values 622, and w represents a modifiable weight that controls the relative importance of the $L_{DEPTH}$ and $L_{SMOOTHNESS}$ terms of loss function 636.

In some implementations, the depth loss term $L_{DEPTH} = \frac{1}{2}\sum_{i=1}^{N}(v_i * DF(p_i)^2)$ and the smoothness loss term $L_{SMOOTHNESS} = \frac{1}{2}\sum_{i=1}^{N}(\|d_i\|_2^2)$ may be implemented by loss function 636 independently of one another. For example, loss value 638 may be equal to $L_{DEPTH}$ and may be independent of $L_{SMOOTHNESS}$, and vice versa. The depth loss term $L_{DEPTH}$ may incentivize 3D keypoint position calculator 640 to generate updated 3D keypoint positions 642 that match the depth information in depth data 610, thus causing convergence to the sensor data. The smoothness loss term $L_{SMOOTHNESS}$ may incentivize 3D keypoint position calculator 640 to generate updated 3D keypoint positions 642 that are close to preceding 3D keypoint positions 604 and/or predicted keypoint positions 606, thus causing the 3D keypoint positions to change smoothly over time and reduce jitter and/or noise.

3D keypoint position calculator 640 may be configured to generate updated 3D keypoint positions 642 based on loss value 638. For example, 3D keypoint position calculator 640 may be configured to determine updated 3D keypoint positions 642 by determining a gradient of loss function 636. Based on this gradient and loss value 638, 3D keypoint position calculator 640 may be configured to select updated 3D keypoint positions 642 that are expected to reduce loss value 638, and thus improve an accuracy with which the keypoints represent the pose of the actor. After updating the values of initial 3D keypoint positions 614 based on updated 3D keypoint positions 642, the operations discussed above may be repeated to compute another instance of loss value 638 and, based thereon, another instance of updated 3D keypoint positions 642. Such iterative computation of updated 3D keypoint positions 642 may be repeated until, for example, loss value 638 is reduced to below a target loss value.

In some implementations, 3D keypoint position calculator 640 may be configured to generate updated 3D keypoint positions 642 based additionally on one or more constraints imposed on the pose of the actor. For example, pixel position difference calculator 628 may provide a pixel position difference constraint, and limb length calculator 630 may provide a limb length constraint. Updated 3D keypoint positions 642 may be selected such that the one or more constraints are satisfied, thus generating poses that are physically plausible. 3D keypoint position calculator 640 may implement and/or use one or more of: a dividing rectangles (DIRECT) algorithm, a controlled random search (CRS) with local mutation algorithm, a multi-level single-linkage (MLSL) algorithm, a stochastic global optimization (StoGO) algorithm, an Improved Stochastic Ranking Evolution Strategy (ISRES) algorithm, an ESCH evolutionary algorithm, a Constrained Optimization BY Linear Approximations (COBYLA) algorithm, a BOBYQA algorithm, a NEWUOA algorithm, a principal axis (PRAXIS) algorithm, a Nelder-Mead Simplex algorithm, a Method of Moving Asymptotes (MMA) algorithm, a Sequential Least-Squares Quadratic Programming (SLSQP) algorithm, a Preconditioned truncated Newton algorithm, a shifted limited-memory variable-metric algorithm, and/or a Lagrangian algorithm, among other possibilities.

Pixel position difference calculator 628 may be configured to determine pixel positions difference values 632 based on image data 612 and candidate 3D keypoint positions that represent possible values for updated 3D keypoint positions 642. Pixel positions difference values 632 may include, for each respective keypoint of the plurality of keypoints, a corresponding pixel position difference value that indicates a distance, measured in pixels, between (i) a corresponding detected image position within image data 612 at which the respective keypoint has been detected (e.g., using the keypoint detection model) and (ii) a corresponding projected image position within image data 612 of a projection onto image data 612 of the corresponding candidate 3D keypoint position of the respective keypoint. The candidate 3D keypoint positions may represent a set of proposed values that, if they meet the pixel position difference constraint, may be selected as updated 3D keypoint positions 642 and, if they do not meet the pixel position difference constraint, may be discarded and replaced by another set of proposed values.

Pixel position difference calculator 628 may implement the function $C_i^{PIXEL} = \|q_i - Kp_i\|_\infty$ , where $C_i^{PIXEL}$ represents the corresponding pixel position distance value of the *ith* keypoint, $q_i$ represents the corresponding detected image position of the *ith* keypoint, $K$ represents the camera intrinsic matrix, $p_i$ represents the candidate 3D keypoint position of the *ith* keypoint, $Kp_i$ represents the projected image position of the *ith* keypoint within image data 612, and the function $\|x\|_\infty$ determines a magnitude of a largest element of vector x. In other implementations, a different norm (e.g., L1, or L2) may be used instead of the infinity norm to determine the distance between the corresponding detected image position and the corresponding projected image position.

3D keypoint position calculator 640 may be configured to determine updated 3D keypoint positions 642 such that $C_i^{PIXEL} < C_{THRESHOLD}^{PIXEL}$ , where $C_{THRESHOLD}^{PIXEL}$ represents a threshold pixel difference value, which may be a modifiable parameter of keypoint position system 600. That is, 3D keypoint position calculator 640 may be configured to determine updated 3D keypoint positions 642 such that 2D representations (within an image space of image data 612) of updated 3D keypoint positions 642 fall within the threshold pixel difference of corresponding keypoint detections within image data 612. Thus, when the projection of each of the candidate 3D keypoint positions fall within the threshold pixel difference of the corresponding keypoint detection, 3D keypoint position calculator 640 may be configured to assign the values of the candidate 3D keypoint position to updated 3D keypoint positions 642. When the projection of at least one of the candidate 3D keypoint positions does not fall within the threshold pixel difference of the corresponding keypoint detection, 3D keypoint position calculator 640 may be configured to select another set of candidate 3D keypoint positions.

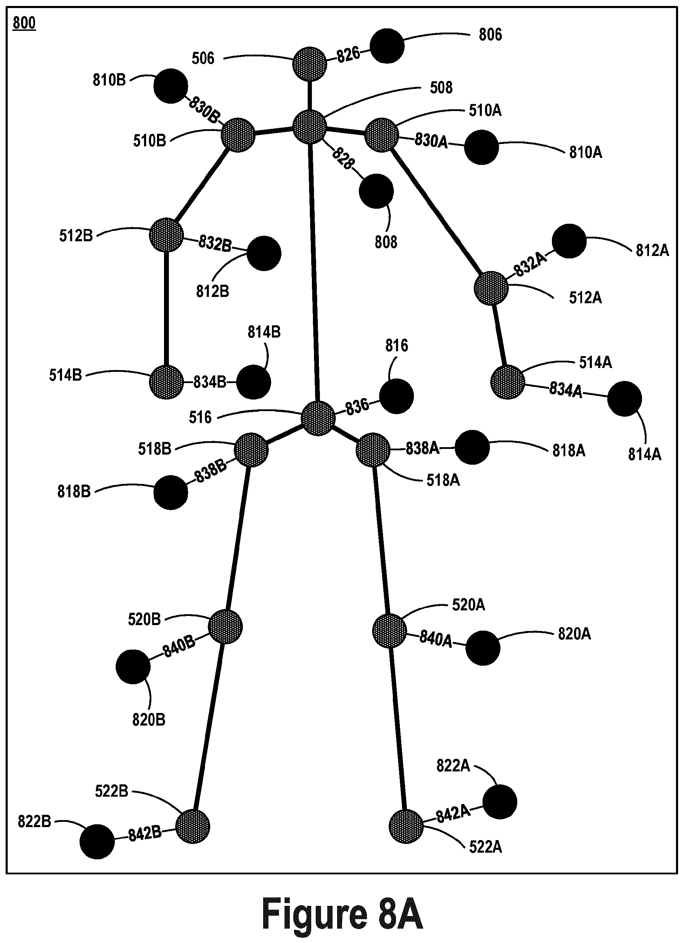

Figure 8A provides a graphical representation of pixel position difference values 632. Specifically, image 800 provides a graphical representation of image data 612. Image 800 includes (i) a projection, onto the image space of image 800, of a pose representing the candidate 3D keypoint positions and indicated using pattern-filled circles and (ii) keypoint detections, within image 800, of keypoints 506-522B and indicated using black-filled circles. The positional differences within image 800 between the projection of the candidate 3D keypoint positions and the keypoint detections have been exaggerated for clarity of illustration.

The keypoint detections within image 800 may include detection 806 of keypoint 506, detection 808 of keypoint 508, detection 810A of keypoint 510A, detection 810B of keypoint 510B, detection 812A of keypoint 512A, detection 812B of keypoint 512B, detection 814A of keypoint 514A, detection 814B of keypoint 514B, detection 816 of keypoint 516, detection 818A of keypoint 518A, detection 818B of keypoint 518B, detection 820A of keypoint 520A, detection 820B of keypoint 520B, detection 822A of keypoint 522A, and detection 822B of keypoint 522B (i.e., detections 806-822B).

The pixel position difference value corresponding to a respective keypoint of keypoints 506-522B may be based on a distance between (i) the projection, onto image 800, of the candidate 3D position of the respective keypoint and (ii) the pixel position at which the respective keypoint has been detected within image 800. Specifically, the respective pixel position difference values corresponding to keypoints 506, 508, 510A, 510B, 512A, 512B, 514A, 514B, 516, 518A, 518B, 520A, 520B, 522A, and 522B may be represented, respectively, by distances 826, 828, 830A, 830B, 832A, 832B, 834A, 834B, 836, 838A, 838B, 840A, 840B, 842A, and 842B. Thus, 3D keypoint position calculator 640 may be configured to generate updated 3D keypoint positions 642 that approach coincidence and/or spatial proximity, within image 800, with corresponding ones of keypoint detections 806-822B.

Turning back to Figure 6, limb length calculator 630 may be configured to determine limb length values 634 based on the candidate 3D keypoint positions. The plurality of keypoints may form a plurality of limbs of the actor. Limb length values 634 may include, for each respective limb of the plurality of limbs, a corresponding limb length value that indicates a distance between corresponding keypoints that define the respective limb.

Limb length calculator 630 may thus implement the function $C_k^{LIMB} = \left\| p_i - p_j \right\|_2$ , where $C_k^{LIMB}$ represents the corresponding limb length value of the *kth* limb, $p_i$ represents the candidate 3D keypoint position of a first keypoint that defines the *kth* limb, and $p_j$ represents the candidate 3D keypoint position of a second keypoint that defines the *kth* limb. In other implementations, a different norm (e.g., L1) may be used instead of the L2 norm to determine limb length values 634.

3D keypoint position calculator 640 may be configured to determine updated 3D keypoint positions 642 such that $(1 - \epsilon)l_k \leq C_k^{LIMB} \leq (1 + \epsilon)l_k$ , where $l_k$ represents a reference length (e.g., average human length) of the *kth* limb, $\varepsilon$ represents a tolerance value, $(1 - \varepsilon)l_k$ represents a minimum limb length of the *kth* limb, and $(1 + \varepsilon)l_k$ represents a maximum limb length of the *kth* limb. That is, 3D keypoint position calculator 640 may be configured to determine updated 3D keypoint positions 642 such that each respective limb of the plurality of limbs has a corresponding length between or equal to (i) a minimum limb length corresponding to the respective limb and (ii) a maximum limb length corresponding to the respective limb. Thus, when the limb length of each respective limb of the plurality of limbs, as defined by the candidate 3D keypoint positions, is equal to or between the minimum and maximum limb length of the respective limb, 3D keypoint position calculator 640 may be configured to assign the values of the candidate 3D keypoint position to updated 3D keypoint positions 642. When the limb length of at least one limb of the plurality of limbs, as defined by the candidate 3D keypoint positions, is below the minimum limb length or above the maximum limb length of the respective limb, 3D keypoint position calculator 640 may be configured to select another set of candidate 3D keypoint positions.

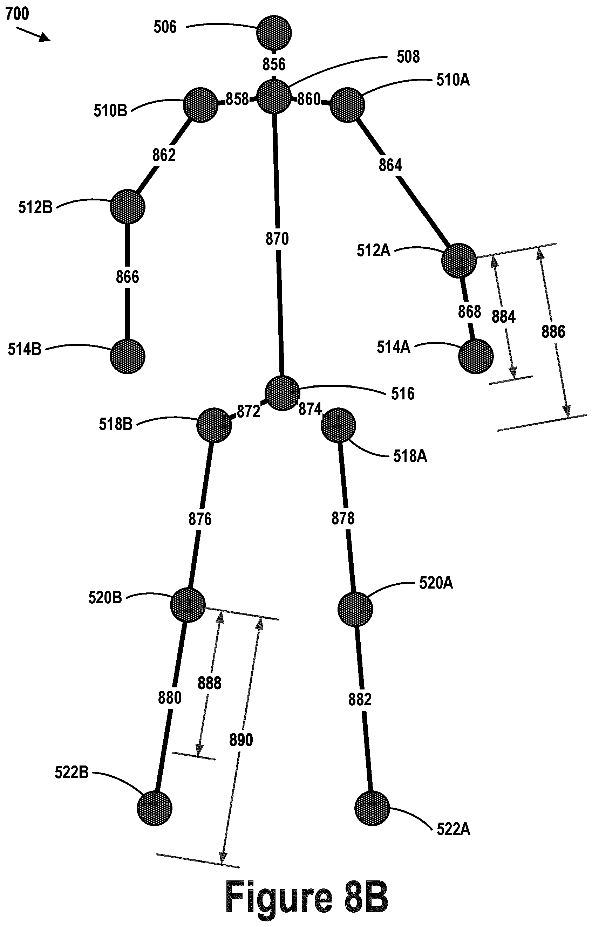

Figure 8B provides a graphical representation of limb length values 634. Specifically, keypoints 506-522B form a plurality of limbs, including neck 856, shoulders 858 and 860, upper arms 862 and 864, forearms 866 and 868, trunk 870, hips 872 and 874, upper legs 876 and 878, and lower legs 880 and 882 (i.e., limbs 856-882). When keypoints 506-522B are arranged in pose 700, each respective limb of limbs 856-882 has a corresponding length, as indicated by the line connecting the corresponding keypoints that define the respective limb.

Additionally, each respective limb of limbs 856-882 is associated with the corresponding minimum length and the corresponding maximum length. For example, forearms 866 and 868 are each associated with minimum length 884 and maximum length 886. The length of forearm 868 is below minimum length 884, and thus the limb length condition is not satisfied by keypoints 512A and 514A. As another example, lower legs 880 and 882 are each associated with minimum length 888 and maximum length 890. The length of lower leg 880 is greater than minimum length 888 and below maximum length 890, and thus the limb length condition is satisfied by keypoints 520B and 522B.

Turning back to Figure 6, in some implementations, the operations discussed with respect to Figure 6 may be performed with respect to a plurality of different actors represented by sensor data 608. Specifically, a corresponding actor-specific instance of each of initial 3D keypoint positions 614, 3D position difference values 622, depth field values 624, keypoint visibility values 626, loss value 638, limb length values 634, and/or pixel position difference values 632 may be determined for each respective actor of the plurality of actors. Accordingly, updated 3D keypoint positions 642 may be independently determined for each respective actor of the plurality of actors, thus allowing keypoint position system 600 and/or keypoint tracker 602 to detect and track multiple different actors represented by sensor data 608.

In some implementations, limb length calculator 630 and/or pixel position difference calculator 628 may instead be used to calculate additional terms of loss function 636 rather than providing constraints to 3D keypoint position calculator 640. For example, loss function 636 may be expressed as $L_{POSE} = L_{DEPTH} + w_1 L_{SMOOTHNESS} + w_2 L_{LIMB} + w_3 L_{PROJECTION}$, where $L_{LIMB} = \left\| C_k^{LIMB} - l_k \right\|_2^2$, $L_{PROJECTION} = \left\| q_i - K p_i \right\|_2^2$ , and $w_1$, $w_2$, and $w_3$ provide

modifiable relative weighting. That is, rather than operating as part of constraints that must be met by updated 3D keypoint positions 642, limb length values 634 and pixel position difference values 632 may instead contribute to loss value 638. Thus, limb length values 634 and pixel position difference values 632 may incentivize, rather than require, 3D keypoint position calculator 640 to generate keypoint positions that, respectively, (i) form physically plausible limbs and (ii), when projected into 2D image space, are consistent with 2D keypoint detections in image data 612.

## V. Additional Example Operations

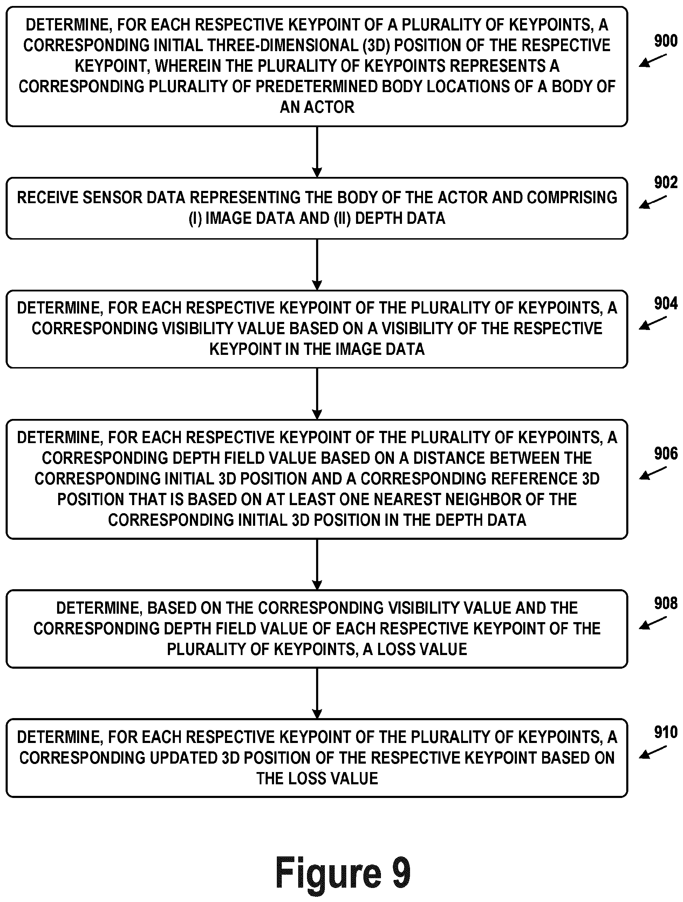

Figure 9 illustrates a flow chart of operations related to determining 3D positions of keypoints associated with one or more actors. The operations may be carried out by robotic system 100, robot 200, keypoint position system 600, and/or keypoint tracker 602, among other possibilities. Further, these embodiments may be combined with features, aspects, and/or implementations of any of the previous figures or otherwise described herein.

Block 900 involves determining, for each respective keypoint of a plurality of keypoints, a corresponding initial three-dimensional (3D) position of the respective keypoint. The plurality of keypoints represent a corresponding plurality of predetermined body locations of a body of an actor.

Block 902 involves receiving sensor data representing the body of the actor. The sensor data includes (i) image data and (ii) depth data.

Block 904 involves determining, for each respective keypoint of the plurality of keypoints, a corresponding visibility value based on a visibility of the respective keypoint in the image data.

Block 906 involves determining, for each respective keypoint of the plurality of keypoints, a corresponding depth field value based on a distance between the corresponding initial 3D position and a corresponding reference 3D position that is based on at least one nearest neighbor of the corresponding initial 3D position in the depth data.

Block 908 involves determining, based on the corresponding visibility value and the corresponding depth field value of each respective keypoint of the plurality of keypoints, a loss value.

Block 910 involves determining, for each respective keypoint of the plurality of keypoints, a corresponding updated 3D position of the respective keypoint based on the loss value.

In some embodiments, a robotic device may be caused to interact with the actor based on a pose represented by the corresponding updated 3D position of each respective keypoint of the plurality of keypoints.

In some embodiments, for each respective keypoint of the plurality of keypoints, a corresponding preceding 3D position of the respective keypoint may be determined. The corresponding preceding 3D position may be associated with a first time. Each of the corresponding initial 3D position and the corresponding updated 3D position may be associated with a second time that is subsequent to the first time. For each respective keypoint of the plurality of keypoints, a corresponding position difference value may be determined based on (i) the corresponding initial 3D position of the respective keypoint and (ii) the corresponding preceding 3D position of the respective keypoint. The loss value may be further based on the corresponding position difference value of each respective keypoint of the plurality of keypoints.

In some embodiments, for each respective keypoint of the plurality of keypoints, a corresponding predicted 3D position of the respective keypoint may be determined by propagating the corresponding preceding 3D position of the respective keypoint from the first time to the second time based on a tracked motion of the respective keypoint. Each of the corresponding initial 3D position and the corresponding updated 3D position may represent the predicted 3D position updated based on the sensor data. The corresponding position difference value may be based on a distance between (i) the corresponding initial 3D position of the respective keypoint and (ii) the corresponding predicted 3D position of the respective keypoint.

In some embodiments, the loss value may be based on a weighted sum of (i) a product, for each respective keypoint of the plurality of keypoints, of the corresponding visibility value and a square of the corresponding depth field value and (ii) a square of the corresponding position difference value of each respective keypoint of the plurality of keypoints.

Determining the corresponding reference 3D position includes determining, for each respective keypoint of the plurality of keypoints, a corresponding plurality of difference values. Each respective difference value of the corresponding plurality of difference values represents a distance between (i) the corresponding initial 3D position of the respective keypoint and (ii) the corresponding 3D position of each of a plurality of 3D points of the depth data. Determining the corresponding reference 3D position also includes selecting, for each respective keypoint of the plurality of keypoints, from the plurality of 3D points of the depth data, and based on the corresponding plurality of difference values, the at least one nearest neighbor that is spatially closest to the corresponding initial 3D position.

In some embodiments, determining the corresponding depth field value may include determining, based on the image data, a mask that indicates a portion of the image occupied by the actor, and selecting the at least one nearest neighbor by selecting, from the depth data, at least one 3D point that is positioned within the mask.

In some embodiments, determining the corresponding visibility value may include determining, for each respective keypoint of the plurality of keypoints, a corresponding confidence value associated with detection of the respective keypoint within the image data, and determining, for each respective keypoint of the plurality of keypoints, the corresponding visibility value based on comparing the corresponding confidence value to a threshold confidence value.

In some embodiments, determining the corresponding visibility value may include determining, based on the image data, a mask that indicates a portion of the image occupied by the actor. Determining the corresponding visibility value may also include determining, for each respective keypoint of the plurality of keypoints, a corresponding position of the respective keypoint relative to the mask, and determining, for each respective keypoint of the plurality of keypoints, the corresponding visibility value based on the corresponding position of the respective keypoint relative to the mask.

In some embodiments, determining the corresponding visibility value may include determining, for each respective keypoint of the plurality of keypoints, a corresponding depth value associated with the respective keypoint within the depth data, and determining, for each respective keypoint of the plurality of keypoints, the corresponding visibility value based on comparing a depth of the corresponding initial 3D position of the respective keypoint to the corresponding depth value associated with the respective keypoint within the depth data.

In some embodiments, for each respective keypoint of the plurality of keypoints, a corresponding detected image position representing a detection of the respective keypoint within the image data may be determined. Determining the corresponding updated 3D position of the respective keypoint may include selecting the corresponding updated 3D position such that a corresponding pixel difference value of each respective keypoint of the plurality of keypoints does not exceed a threshold pixel difference value. The corresponding pixel difference value may represent, for each respective keypoint of the plurality of keypoints, a difference between (i) the corresponding detected image position of the respective keypoint and (ii) a corresponding projected image position of the respective keypoint. The corresponding projected image position may represent, for each respective keypoint of the plurality of keypoints, a projection of the corresponding updated 3D position of the respective keypoint onto the image data.

In some embodiments, for each respective keypoint of the plurality of keypoints, a corresponding detected image position representing a detection of the respective keypoint within the image data may be determined. Determining the corresponding updated 3D position of the respective keypoint may include determining, for each respective keypoint of the plurality of keypoints, a candidate 3D position of the respective keypoint based on the loss value. Determining the corresponding updated 3D position of the respective keypoint may also include determining, for each respective keypoint of the plurality of keypoints, a corresponding projected image position representing a projection of the candidate 3D position of the respective keypoint onto the image data, and determining, for each respective keypoint of the plurality of keypoints, a corresponding pixel difference value based on a difference between (i) the corresponding detected image position of the respective keypoint and (ii) the corresponding projected image position of the respective keypoint. When the corresponding pixel difference value of each respective keypoint of the plurality of keypoints does not exceed a threshold pixel difference value, the candidate 3D position may be selected as the corresponding updated 3D position. When the corresponding pixel difference value of at least one keypoint of the plurality of keypoints exceeds the threshold pixel difference value, another candidate 3D position may be determined for one or more keypoints of the plurality of keypoints based on the loss value.

In some embodiments, the plurality of keypoints may be interconnected to define a plurality of limbs of the actor. Determining the corresponding updated 3D position of the respective keypoint may include selecting the corresponding updated 3D position such that a corresponding limb length of each respective limb of the plurality of limbs is between (i) a maximum limb length corresponding to the respective limb and (ii) a minimum limb length corresponding to the respective limb. The corresponding limb length of each respective limb of the plurality of limbs may be determined based on the corresponding updated 3D positions of keypoints that define the respective limb.

In some embodiments, the plurality of keypoints may be interconnected to define a plurality of limbs of the actor. Determining the corresponding updated 3D position of the respective keypoint may include determining, for each respective keypoint of the plurality of keypoints, a candidate 3D position of the respective keypoint based on the loss value, and determining, for each respective limb of the plurality of limbs, a corresponding limb length based on the candidate 3D positions of keypoints that define the respective limb. When the corresponding limb length of each respective limb of the plurality of limbs is between (i) a maximum limb length corresponding to the respective limb and (ii) a minimum limb length corresponding to the respective limb, the candidate 3D position may be selected as the corresponding updated 3D position. When the corresponding limb length of at least one limb of the plurality of limbs is not between (i) a maximum limb length corresponding to the at least one limb and (ii) a minimum limb length corresponding to the at least one limb, another candidate 3D position may be determined for one or more keypoints of the plurality of keypoints based on the loss value.

In some embodiments, for each respective keypoint of the plurality of keypoints, a tracked motion may be determined based on the corresponding updated 3D position of the respective keypoint and a preceding 3D position of the respective keypoint. For each respective keypoint of the plurality of keypoints and based on the tracked motion thereof, a subsequent 3D position of the respective keypoint may be determined by propagating the corresponding updated 3D position of the respective keypoint to a subsequent time that corresponds to the subsequent 3D position.

In some embodiments, the sensor data may represent a corresponding body of each of a plurality of actors.

Determining the corresponding initial 3D position of the respective keypoint may include determining, for each respective actor of the plurality of actors, an actor-specific initial 3D position for each respective keypoint of a plurality of keypoints associated with the respective actor. Determining the corresponding visibility value may include determining, for each respective actor of the plurality of actors, a corresponding actor-specific visibility value for each respective keypoint of the plurality of keypoints associated with the respective actor. Determining the corresponding depth field value may include determining, for each respective actor of the plurality of actors, a corresponding actor-specific depth field value for each respective keypoint of the plurality of keypoints associated with the respective actor. Determining the loss value may include determining, for each respective actor of the plurality of actors, an actor-specific loss value based on the corresponding actor-specific depth field value and the corresponding actor-specific depth field value of each respective keypoint of the plurality of keypoints associated with the respective actor. Determining the corresponding updated 3D position may include determining, for each respective actor of the plurality of actors, an actor-specific updated 3D position of each respective keypoint of the plurality of keypoints associated with the respective actor based on the corresponding actor-specific loss value.

## VI. Conclusion

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical operations or actions in the method or technique. The program code and/or related data may be stored on any type of computer readable medium such as a storage device including random access memory (RAM), a disk drive, a solid state drive, or another storage medium.

The computer readable medium may also include non-transitory computer readable media such as computer readable media that store data for short periods of time like register memory, processor cache, and RAM. The computer readable media may also include non-transitory computer readable media that store program code and/or data for longer periods of time. Thus, the computer readable media may include secondary or persistent long term storage, like read only memory (ROM), optical or magnetic disks, solid state drives, compact-disc read only memory (CD-ROM), for example. The computer readable media may also be any other volatile or non-volatile storage systems. A computer readable medium may be considered a computer readable storage medium, for example, or a tangible storage device.

Moreover, a step or block that represents one or more information transmissions may correspond to information transmissions between software and/or hardware modules in the same physical device. However, other information transmissions may be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

**Claims**

1. A computer-implemented method comprising:

   determining (900), for each respective keypoint of a plurality of keypoints (506-522B), a corresponding initial three-dimensional, 3D, position of the respective keypoint, wherein the plurality of keypoints represents a corresponding plurality of predetermined body locations of a body of an actor (530);
   receiving (902) sensor data representing the body of the actor and comprising (i) image data (800) and (ii) depth data (702);
   determining (904), for each respective keypoint of the plurality of keypoints, a corresponding visibility value based on a visibility of the respective keypoint in the image data;
   determining, for each respective keypoint of the plurality of keypoints, a corresponding reference 3D position (706, 708, 710A, 710B, 712A, 712B, 714A, 714B, 716, 718A, 718B, 720A, 720B, 722A, 722B) that is based on at least one nearest neighbor of the corresponding initial 3D position in the depth data, wherein determining the corresponding reference 3D position comprises:

      determining, for each respective keypoint of the plurality of keypoints, a corresponding plurality of difference values, wherein each respective difference value of the corresponding plurality of difference values represents a distance between (i) the corresponding initial 3D position of the respective keypoint and (ii) a corresponding 3D position of each of a plurality of 3D points of the depth data; and
      selecting, for each respective keypoint of the plurality of keypoints, from the plurality of 3D points of the depth data, and based on the corresponding plurality of difference values, the at least one nearest neighbor that is spatially closest to the corresponding initial 3D position;

   determining (906), for each respective keypoint of the plurality of keypoints, a corresponding depth field value based on a distance between the corresponding initial 3D position and the corresponding reference 3D position;
   determining (908), based on the corresponding visibility value and the corresponding depth field value of each respective keypoint of the plurality of keypoints, a loss value; and
   determining (910), for each respective keypoint of the plurality of keypoints, a corresponding updated 3D position of the respective keypoint based on the loss value.

2. The computer-implemented method of claim 1, further comprising:
   causing a robotic device to interact with the actor based on a pose represented by the corresponding updated 3D position of each respective keypoint of the plurality of keypoints.

3. The computer-implemented method of claim 1 or 2, further comprising:

   determining, for each respective keypoint of the plurality of keypoints, a corresponding preceding 3D position of the respective keypoint, wherein the corresponding preceding 3D position is associated with a first time, and wherein each of the corresponding initial 3D position and the corresponding updated 3D position is associated with a second time that is subsequent to the first time; and
   determining, for each respective keypoint of the plurality of keypoints, a corresponding position difference value based on (i) the corresponding initial 3D position of the respective keypoint and (ii) the corresponding preceding 3D position of the respective keypoint, wherein the loss value is further based on the corresponding position difference value of each respective keypoint of the plurality of keypoints.

4. The computer-implemented method of claim 3,

   further comprising:
   determining, for each respective keypoint of the plurality of keypoints, a corresponding predicted 3D position of the respective keypoint by propagating the corresponding preceding 3D position of the respective keypoint from the first time to the second time based on a tracked motion of the respective keypoint, wherein each of the corresponding initial 3D position and the corresponding updated 3D position represents the predicted 3D position updated based on the sensor data, and wherein the corresponding position difference value is based on a distance between (i) the corresponding initial 3D position of the respective keypoint and (ii) the corresponding predicted 3D position of the respective keypoint;

and/or wherein the loss value is based on a weighted sum of (i) a product, for each respective keypoint of the plurality of keypoints, of the corresponding visibility value and a square of the corresponding depth field value and (ii) a square of the corresponding position difference value of each respective keypoint of the plurality of keypoints.

5. The computer-implemented method of any preceding claim,
   wherein determining the corresponding reference 3D position comprises:

   determining, based on the image data, a mask (760) that indicates a portion of the image occupied by the actor; and

   selecting the at least one nearest neighbor by selecting, from the depth data, at least one 3D point that is positioned within the mask.

6. The computer-implemented method of any preceding claim, wherein determining the corresponding visibility value comprises:

   determining, for each respective keypoint of the plurality of keypoints, a corresponding confidence value associated with detection of the respective keypoint within the image data; and

   determining, for each respective keypoint of the plurality of keypoints, the corresponding visibility value based on comparing the corresponding confidence value to a threshold confidence value.

7. The computer-implemented method of any preceding claim,

   wherein determining the corresponding visibility value comprises:

   determining, based on the image data, a mask that indicates a portion of the image occupied by the actor;
   determining, for each respective keypoint of the plurality of keypoints, a corresponding position of the respective keypoint relative to the mask; and
   determining, for each respective keypoint of the plurality of keypoints, the corresponding visibility value based on the corresponding position of the respective keypoint relative to the mask;

   and/or wherein determining the corresponding visibility value comprises:

   determining, for each respective keypoint of the plurality of keypoints, a corresponding depth value associated with the respective keypoint within the depth data; and
   determining, for each respective keypoint of the plurality of keypoints, the corresponding visibility value based on comparing a depth of the corresponding initial 3D position of the respective keypoint to the corresponding depth value associated with the respective keypoint within the depth data.

8. The computer-implemented method of any preceding claim, further comprising:
   determining, for each respective keypoint of the plurality of keypoints, a corresponding detected image position (806-822B) representing a detection of the respective keypoint within the image data, wherein determining the corresponding updated 3D position of the respective keypoint comprises:
   selecting the corresponding updated 3D position such that a corresponding pixel difference value (826, 828, 830A, 830B, 832A, 832B, 834A, 834B, 836, 838A, 838B, 840A, 840B, 842A, 842B) of each respective keypoint of the plurality of keypoints does not exceed a threshold pixel difference value, wherein the corresponding pixel difference value represents, for each respective keypoint of the plurality of keypoints, a difference between (i) the corresponding detected image position of the respective keypoint and (ii) a corresponding projected image position of the respective keypoint, and wherein the corresponding projected image position represents, for each respective keypoint of the plurality of keypoints, a projection of the corresponding updated 3D position of the respective keypoint onto the image data.

9. The computer-implemented method of any preceding claim, further comprising:
   determining, for each respective keypoint of the plurality of keypoints, a corresponding detected image position representing a detection of the respective keypoint within the image data, wherein determining the corresponding updated 3D position of the respective keypoint comprises:

determining, for each respective keypoint of the plurality of keypoints, a candidate 3D position of the respective keypoint based on the loss value;

determining, for each respective keypoint of the plurality of keypoints, a corresponding projected image position representing a projection of the candidate 3D position of the respective keypoint onto the image data;

determining, for each respective keypoint of the plurality of keypoints, a corresponding pixel difference value based on a difference between (i) the corresponding detected image position of the respective keypoint and (ii) the corresponding projected image position of the respective keypoint;

when the corresponding pixel difference value of each respective keypoint of the plurality of keypoints does not exceed a threshold pixel difference value, selecting the candidate 3D position as the corresponding updated 3D position; and

when the corresponding pixel difference value of at least one keypoint of the plurality of keypoints exceeds the threshold pixel difference value, determining, for one or more keypoints of the plurality of keypoints, another candidate 3D position based on the loss value.

10. The computer-implemented method of any preceding claim, wherein the plurality of keypoints are interconnected to define a plurality of limbs (856-882) of the actor, and wherein determining the corresponding updated 3D position of the respective keypoint comprises:

selecting the corresponding updated 3D position such that a corresponding limb length of each respective limb of the plurality of limbs is between (i) a maximum limb length (886) corresponding to the respective limb and (ii) a minimum limb length (884) corresponding to the respective limb, wherein the corresponding limb length of each respective limb of the plurality of limbs is determined based on the corresponding updated 3D positions of keypoints that define the respective limb.

11. The computer-implemented method of any preceding claim, wherein the plurality of keypoints are interconnected to define a plurality of limbs of the actor, and wherein determining the corresponding updated 3D position of the respective keypoint comprises:

determining, for each respective keypoint of the plurality of keypoints, a candidate 3D position of the respective keypoint based on the loss value;

determining, for each respective limb of the plurality of limbs, a corresponding limb length based on the candidate 3D positions of keypoints that define the respective limb;

when the corresponding limb length of each respective limb of the plurality of limbs is between (i) a maximum limb length corresponding to the respective limb and (ii) a minimum limb length corresponding to the respective limb, selecting the candidate 3D position as the corresponding updated 3D position; and

when the corresponding limb length of at least one limb of the plurality of limbs is not between (i) a maximum limb length corresponding to the at least one limb and (ii) a minimum limb length corresponding to the at least one limb, determining, for one or more keypoints of the plurality of keypoints, another candidate 3D position based on the loss value.

12. The computer-implemented method of any preceding claim, further comprising:

determining, for each respective keypoint of the plurality of keypoints, a tracked motion based on the corresponding updated 3D position of the respective keypoint and a preceding 3D position of the respective keypoint; and

determining, for each respective keypoint of the plurality of keypoints and based on the tracked motion thereof, a subsequent 3D position of the respective keypoint by propagating the corresponding updated 3D position of the respective keypoint to a subsequent time that corresponds to the subsequent 3D position.

13. The computer-implemented method of any preceding claim, wherein:

the sensor data represents a corresponding body of each of a plurality of actors;

determining the corresponding initial 3D position of the respective keypoint comprises determining, for each respective actor of the plurality of actors, an actor-specific initial 3D position for each respective keypoint of a plurality of keypoints associated with the respective actor;

determining the corresponding visibility value comprises determining, for each respective actor of the plurality of actors, a corresponding actor-specific visibility value for each respective keypoint of the plurality of keypoints associated with the respective actor;

determining the corresponding depth field value comprises determining, for each respective actor of the plurality of actors, a corresponding actor-specific depth field value for each respective keypoint of the plurality of keypoints associated with the respective actor;

determining the loss value comprises determining, for each respective actor of the plurality of actors, an actor-specific loss value based on the corresponding actor-specific depth field value and the corresponding actor-specific depth field value of each respective keypoint of the plurality of keypoints associated with the respective actor; and

determining the corresponding updated 3D position comprises determining, for each respective actor of the plurality of actors, an actor-specific updated 3D position of each respective keypoint of the plurality of keypoints associated with the respective actor based on the corresponding actor-specific loss value.

**14.** A system (100) comprising:

a processor (102); and
a non-transitory computer-readable medium (104) having stored thereon instructions that, when executed by the processor, cause the processor to perform operations comprising the method of any of claims 1-13.

**15.** A non-transitory computer-readable medium (104) having stored thereon instructions that, when executed by a computing device, cause the computing device to perform operations comprising the method of any of claims 1-13.

**Patentansprüche**

**1.** Computerimplementiertes Verfahren, umfassend:

Bestimmen (900) einer entsprechenden anfänglichen dreidimensionalen, 3D-Position des jeweiligen Schlüsselpunkts für jeden jeweiligen Schlüsselpunkt einer Vielzahl von Schlüsselpunkten (506-522B), wobei die Vielzahl von Schlüsselpunkten eine entsprechende Vielzahl von vorbestimmten Körperpositionen eines Körpers eines Akteurs (530) darstellt;
Empfangen (902) von Sensordaten, die den Körper des Akteurs darstellen und (i) Bilddaten (800) und (ii) Tiefendaten (702) umfassen;
Bestimmen (904) eines entsprechenden Sichtbarkeitswertes basierend auf einer Sichtbarkeit des jeweiligen Schlüsselpunktes in den Bilddaten für jeden jeweiligen Schlüsselpunkt der Vielzahl von Schlüsselpunkten;
Bestimmen, für jeden jeweiligen Schlüsselpunkt der Vielzahl von Schlüsselpunkten, einer entsprechenden Referenz-3D-Position (706, 708, 710A, 710B, 712A, 712B, 714A, 714B, 716, 718A, 718B, 720A, 720B, 722A, 722B), die auf mindestens einem nächsten Nachbarn der entsprechenden anfänglichen 3D-Position in den Tiefendaten basiert, wobei das Bestimmen der entsprechenden Referenz-3D-Position Folgendes umfasst:

Bestimmen, für jeden jeweiligen Schlüsselpunkt der Vielzahl von Schlüsselpunkten, einer entsprechenden Vielzahl von Differenzwerten, wobei jeder jeweilige Differenzwert der entsprechenden Vielzahl von Differenzwerten einen Abstand zwischen (i) der entsprechenden anfänglichen 3D-Position des jeweiligen Schlüsselpunkts und (ii) einer entsprechenden 3D-Position von jedem einer Vielzahl von 3D-Punkten der Tiefendaten darstellt; und
Auswählen, für jeden jeweiligen Schlüsselpunkt der Vielzahl von Schlüsselpunkten, aus der Vielzahl von 3D-Punkten der Tiefendaten und basierend auf der entsprechenden Vielzahl von Differenzwerten, des mindestens einen nächsten Nachbarn, der der entsprechenden anfänglichen 3D-Position räumlich am nächsten ist;
Bestimmen (906), für jeden jeweiligen Schlüsselpunkt der Vielzahl von Schlüsselpunkten, eines entsprechenden Tiefenfeldwertes basierend auf einem Abstand zwischen der entsprechenden anfänglichen 3D-Position und der entsprechenden Referenz-3D-Position;
Bestimmen (908) eines Verlustwerts basierend auf dem entsprechenden Sichtbarkeitswert und dem entsprechenden Tiefenfeldwert jedes jeweiligen Schlüsselpunkts der Vielzahl von Schlüsselpunkten; und
Bestimmen (910) einer entsprechenden aktualisierten 3D-Position des jeweiligen Schlüsselpunkts, basierend auf dem Verlustwert, für jeden jeweiligen Schlüsselpunkt der Vielzahl von Schlüsselpunkten.

**2.** Computerimplementiertes Verfahren nach Anspruch 1, ferner umfassend:
Bewirken, dass eine Robotervorrichtung mit dem Akteur interagiert, basierend auf einer Pose, die durch die entsprechende aktualisierte 3D-Position jedes entsprechenden Schlüsselpunkts der Vielzahl von Schlüsselpunkten dargestellt wird.

3. Computerimplementiertes Verfahren nach Anspruch 1 oder 2, ferner umfassend:

Bestimmen einer entsprechenden vorhergehenden 3D-Position des jeweiligen Schlüsselpunkts für jeden jeweiligen Schlüsselpunkt der Vielzahl von Schlüsselpunkten, wobei die entsprechende vorhergehende 3D-Position mit einem ersten Zeitpunkt verbunden ist und wobei jede der entsprechenden anfänglichen 3D-Position und der entsprechenden aktualisierten 3D-Position mit einem zweiten Zeitpunkt verbunden ist, der auf den ersten Zeitpunkt folgt; und

Bestimmen eines entsprechenden Positionsdifferenzwertes für jeden jeweiligen Schlüsselpunkt der Vielzahl von Schlüsselpunkten, basierend auf (i) der entsprechenden anfänglichen 3D-Position des jeweiligen Schlüsselpunkts und (ii) der entsprechenden vorhergehenden 3D-Position des jeweiligen Schlüsselpunkts, wobei der Verlustwert ferner auf dem entsprechenden Positionsdifferenzwert jedes jeweiligen Schlüsselpunkts der Vielzahl von Schlüsselpunkten basiert.

4. Computerimplementiertes Verfahren nach Anspruch 3, ferner umfassend:

Bestimmen einer entsprechenden vorhergesagten 3D-Position des jeweiligen Schlüsselpunkts für jeden jeweiligen Schlüsselpunkt der Vielzahl von Schlüsselpunkten durch Fortschreiten der entsprechenden vorhergehenden 3D-Position des jeweiligen Schlüsselpunkts von dem ersten Zeitpunkt zu dem zweiten Zeitpunkt basierend auf einer verfolgten Bewegung des jeweiligen Schlüsselpunkts, wobei jede der entsprechenden anfänglichen 3D-Position und der entsprechenden aktualisierten 3D-Position die vorhergesagte 3D-Position darstellt, die basierend auf den Sensordaten aktualisiert wird, und wobei der entsprechende Positionsdifferenzwert auf einem Abstand zwischen (i) der entsprechenden anfänglichen 3D-Position des jeweiligen Schlüsselpunkts und (ii) der entsprechenden vorhergesagten 3D-Position des jeweiligen Schlüsselpunkts basiert;

und/oder wobei der Verlustwert auf einer gewichteten Summe aus (i) einem Produkt des entsprechenden Sichtbarkeitswerts und eines Quadrats des entsprechenden Tiefenfeldwerts und (ii) einem Quadrat des entsprechenden Positionsdifferenzwerts jedes entsprechenden Schlüsselpunkts aus der Vielzahl von Schlüsselpunkten für jeden jeweiligen Schlüsselpunkt basiert.

5. Computerimplementiertes Verfahren nach einem der vorhergehenden Ansprüche, wobei das Bestimmen der entsprechenden 3D-Referenzposition Folgendes umfasst:

Bestimmen, basierend auf den Bilddaten, einer Maske (760), die einen Abschnitt des Bildes angibt, der von dem Akteur eingenommen wird; und

Auswählen des mindestens einen nächsten Nachbarn, indem aus den Tiefendaten mindestens ein 3D-Punkt ausgewählt wird, der sich innerhalb der Maske befindet.

6. Computerimplementiertes Verfahren nach einem der vorhergehenden Ansprüche, wobei das Bestimmen des entsprechenden Sichtbarkeitswerts Folgendes umfasst:

Bestimmen eines entsprechenden Vertrauenswertes, der mit der Erfassung des jeweiligen Schlüsselpunktes innerhalb der Bilddaten verbunden ist, für jeden jeweiligen Schlüsselpunkt der Vielzahl von Schlüsselpunkten; und

Bestimmen des entsprechenden Sichtbarkeitswerts für jeden einzelnen Schlüsselpunkt der Vielzahl von Schlüsselpunkten, basierend auf dem Vergleichen des entsprechenden Konfidenzwerts mit einem Schwellenkonfidenzwert.

7. Computerimplementiertes Verfahren nach einem der vorhergehenden Ansprüche, wobei das Bestimmen des entsprechenden Sichtbarkeitswerts Folgendes umfasst:

Bestimmen, basierend auf den Bilddaten, einer Maske, die einen Abschnitt des Bildes angibt, der von dem Akteur eingenommen wird;

Bestimmen einer entsprechenden Position des jeweiligen Schlüsselpunktes relativ zur Maske für jeden jeweiligen Schlüsselpunkt der Vielzahl von Schlüsselpunkten; und

Bestimmen des entsprechenden Sichtbarkeitswerts für jeden einzelnen Schlüsselpunkt aus der Vielzahl der Schlüsselpunkte, basierend auf der entsprechenden Position des jeweiligen Schlüsselpunkts relativ zur Maske; und/oder wobei das Bestimmen des entsprechenden Sichtbarkeitswerts Folgendes umfasst:

Bestimmen eines entsprechenden Tiefenwertes, der mit dem jeweiligen Schlüsselpunkt innerhalb der Tiefendaten verbunden ist, für jeden jeweiligen Schlüsselpunkt der Vielzahl von Schlüsselpunkten; und Bestimmen des entsprechenden Sichtbarkeitswerts für jeden jeweiligen Schlüsselpunkt der Vielzahl von Schlüsselpunkten, basierend auf dem Vergleichen einer Tiefe der entsprechenden anfänglichen 3D-Position des jeweiligen Schlüsselpunkts mit dem entsprechenden Tiefenwert, der dem jeweiligen Schlüsselpunkt innerhalb der Tiefendaten zugeordnet ist.

8. Computerimplementiertes Verfahren nach einem der vorhergehenden Ansprüche, ferner umfassend: Bestimmen einer entsprechenden detektierten Bildposition (806-822B), die eine Detektion des jeweiligen Schlüsselpunkts innerhalb der Bilddaten darstellt, für jeden jeweiligen Schlüsselpunkt der Vielzahl von Schlüsselpunkten, wobei das Bestimmen der entsprechenden aktualisierten 3D-Position des jeweiligen Schlüsselpunkts Folgendes umfasst:
Auswählen der entsprechenden aktualisierten 3D-Position, sodass ein entsprechender Pixeldifferenzwert (826, 828, 830A, 830B, 832A, 832B, 834A, 834B, 836, 838A, 838B, 840A, 840B, 842A, 842B) jedes jeweiligen Schlüsselpunkts der Vielzahl von Schlüsselpunkten einen Schwellenpixeldifferenzwert nicht überschreitet, wobei der entsprechende Pixeldifferenzwert für jeden jeweiligen Schlüsselpunkt der Vielzahl von Schlüsselpunkten eine Differenz zwischen (i) der entsprechenden detektierten Bildposition des jeweiligen Schlüsselpunkts und (ii) einer entsprechenden projizierten Bildposition des jeweiligen Schlüsselpunkts darstellt, und wobei die entsprechende projizierte Bildposition für jeden jeweiligen Schlüsselpunkt der Vielzahl von Schlüsselpunkten eine Projektion der entsprechenden aktualisierten 3D-Position des jeweiligen Schlüsselpunkts auf die Bilddaten darstellt.

9. Computerimplementiertes Verfahren nach einem der vorhergehenden Ansprüche, ferner umfassend: Bestimmen einer entsprechenden detektierten Bildposition, die eine Detektion des jeweiligen Schlüsselpunkts innerhalb der Bilddaten darstellt, für jeden jeweiligen Schlüsselpunkt der Vielzahl von Schlüsselpunkten, wobei das Bestimmen der entsprechenden aktualisierten 3D-Position des jeweiligen Schlüsselpunkts Folgendes umfasst:

Bestimmen einer 3D-Kandidatenposition für jeden einzelnen Schlüsselpunkt der Vielzahl von Schlüsselpunkten, basierend auf dem Verlustwert;
Bestimmen einer entsprechenden projizierten Bildposition, die eine Projektion der 3D-Kandidatenposition des jeweiligen Schlüsselpunkts auf die Bilddaten darstellt, für jeden jeweiligen Schlüsselpunkt der Vielzahl von Schlüsselpunkten;
Bestimmen eines entsprechenden Pixeldifferenzwertes für jeden jeweiligen Schlüsselpunkt der Vielzahl von Schlüsselpunkten, basierend auf einer Differenz zwischen (i) der entsprechenden erfassten Bildposition des jeweiligen Schlüsselpunktes und (ii) der entsprechenden projizierten Bildposition des jeweiligen Schlüsselpunktes;
Auswählen der 3D-Kandidatenposition als die entsprechende aktualisierte 3D-Position, wenn der entsprechende Pixeldifferenzwert jedes jeweiligen Schlüsselpunktes der Vielzahl von Schlüsselpunkten einen Schwellenpixeldifferenzwert nicht überschreitet; und
wenn der entsprechende Pixeldifferenzwert von mindestens einem Schlüsselpunkt der Vielzahl von Schlüsselpunkten den Schwellenpixeldifferenzwert übersteigt, Bestimmen einer anderen 3D-Kandidatenposition für einen oder mehrere Schlüsselpunkte der Vielzahl von Schlüsselpunkten basierend auf dem Verlustwert.

10. Computerimplementiertes Verfahren nach einem der vorhergehenden Ansprüche, wobei die Vielzahl von Schlüsselpunkten miteinander verbunden sind, um eine Vielzahl von Gliedern (856-882) des Akteurs zu definieren, und wobei das Bestimmen der entsprechenden aktualisierten 3D-Position des jeweiligen Schlüsselpunkts Folgendes umfasst: Auswählen der entsprechenden aktualisierten 3D-Position, sodass eine entsprechende Gliedlänge jedes jeweiligen Glieds der Vielzahl von Gliedern zwischen (i) einer maximalen Gliedlänge (886), die dem jeweiligen Glied entspricht, und (ii) einer minimalen Gliedlänge (884), die dem jeweiligen Glied entspricht, liegt, wobei die entsprechende Gliedlänge jedes jeweiligen Glieds der Vielzahl von Gliedern basierend auf den entsprechenden aktualisierten 3D-Positionen von Schlüsselpunkten, die das jeweilige Glied definieren, bestimmt wird.

11. Computerimplementiertes Verfahren nach einem der vorhergehenden Ansprüche, wobei die Vielzahl von Schlüsselpunkten miteinander verbunden sind, um eine Vielzahl von Gliedern des Akteurs zu definieren, und wobei das Bestimmen der entsprechenden aktualisierten 3D-Position des jeweiligen Schlüsselpunkts Folgendes umfasst:

Bestimmen einer 3D-Kandidatenposition für jeden einzelnen Schlüsselpunkt der Vielzahl von Schlüsselpunkten, basierend auf dem Verlustwert;
Bestimmen einer entsprechenden Gliedlänge für jedes Glied aus der Vielzahl von Gliedern, basierend auf den 3D-Kandidatenpositionen von Schlüsselpunkten, die das jeweilige Glied definieren; wenn die entsprechende Gliedlänge jedes jeweiligen Gliedes der Vielzahl von Gliedern zwischen (i) einer maximalen Gliedlänge, die dem jeweiligen Glied entspricht, und (ii) einer minimalen Gliedlänge, die dem jeweiligen Glied entspricht, liegt, Auswählen der 3D-Kandidatenposition als die entsprechende aktualisierte 3D-Position; und wenn die entsprechende Gliedlänge von mindestens einem Glied der Vielzahl von Gliedern nicht zwischen (i) einer maximalen Gliedlänge, die dem mindestens einen Glied entspricht, und (ii) einer minimalen Gliedlänge, die dem mindestens einen Glied entspricht, liegt, Bestimmen einer anderen 3D-Kandidatenposition für einen oder mehrere Schlüsselpunkte der Vielzahl von Schlüsselpunkten, basierend auf dem Verlustwert.

12. Computerimplementiertes Verfahren nach einem der vorhergehenden Ansprüche, ferner umfassend:

Bestimmen einer verfolgten Bewegung für jeden jeweiligen Schlüsselpunkt der Vielzahl von Schlüsselpunkten, basierend auf der entsprechenden aktualisierten 3D-Position des jeweiligen Schlüsselpunktes und einer vorhergehenden 3D-Position des jeweiligen Schlüsselpunktes; und Bestimmen einer nachfolgenden 3D-Position des jeweiligen Schlüsselpunkts für jeden jeweiligen Schlüsselpunkt der Vielzahl von Schlüsselpunkten und basierend auf der verfolgten Bewegung desselben, indem die entsprechende aktualisierte 3D-Position des jeweiligen Schlüsselpunkts zu einem nachfolgenden Zeitpunkt fortgeschrieben wird, der der nachfolgenden 3D-Position entspricht.

13. Computerimplementiertes Verfahren nach einem der vorhergehenden Ansprüche, wobei:

die Sensordaten einen entsprechenden Körper von jedem einer Vielzahl von Akteuren darstellen; das Bestimmen der entsprechenden anfänglichen 3D-Position des jeweiligen Schlüsselpunkts das Bestimmen einer akteursspezifischen anfänglichen 3D-Position für jeden jeweiligen Schlüsselpunkt aus einer Vielzahl von Schlüsselpunkten, die dem jeweiligen Akteur zugeordnet sind, für jeden jeweiligen Akteur aus der Vielzahl von Akteuren umfasst; das Bestimmen des entsprechenden Sichtbarkeitswerts das Bestimmen eines entsprechenden akteursspezifischen Sichtbarkeitswerts für jeden jeweiligen Schlüsselpunkt der Vielzahl von Schlüsselpunkten, die dem jeweiligen Akteur zugeordnet sind, für jeden jeweiligen Akteur der Vielzahl von Akteuren umfasst; das Bestimmen des entsprechenden Sichtbarkeitswertes das Bestimmen eines entsprechenden akteursspezifischen Sichtbarkeitswertes für jeden entsprechenden Schlüsselpunkt der Vielzahl von Schlüsselpunkten, die mit dem jeweiligen Akteur verbunden sind, für jeden jeweiligen Akteur der Vielzahl von Akteuren umfasst; das Bestimmen des Verlustwertes das Bestimmen eines akteursspezifischen Verlustwertes für jeden jeweiligen Akteur der Vielzahl von Akteuren basierend auf dem entsprechenden akteursspezifischen Tiefenfeldwert und dem entsprechenden akteursspezifischen Tiefenfeldwert jedes jeweiligen Schlüsselpunktes der Vielzahl von Schlüsselpunkten, die dem jeweiligen Akteur zugeordnet sind, umfasst; und das Bestimmen der entsprechenden aktualisierten 3D-Position das Bestimmen einer akteursspezifischen aktualisierten 3D-Position für jeden jeweiligen Akteur aus der Vielzahl von Akteuren basierend auf dem entsprechenden akteursspezifischen Verlustwert umfasst, der dem jeweiligen Akteur zugeordnet ist.

14. System (100), umfassend:

einen Prozessor (102); und ein nichttransitorisches computerlesbares Medium (104), das darauf gespeicherte Anweisungen aufweist, die, wenn sie von dem Prozessor ausgeführt werden, den Prozessor veranlassen, Vorgänge durchzuführen, umfassend das Verfahren nach einem der Ansprüche 1 bis 13.

15. Nichttransitorisches computerlesbares Medium (104), auf dem Anweisungen gespeichert sind, die, wenn sie von einer Rechenvorrichtung ausgeführt werden, die Rechenvorrichtung veranlassen, Vorgänge durchzuführen, umfassend das Verfahren nach einem der Ansprüche 1 bis 13.

**Revendications**

1. Procédé mis en œuvre par ordinateur comprenant :

la détermination (900), pour chaque point clé respectif d'une pluralité de points clés (506-522B), d'une position tridimensionnelle, 3D, initiale correspondante du point clé respectif, dans lequel la pluralité de points clés représente une pluralité correspondante d'emplacements corporels prédéterminés d'un corps d'un acteur (530) ; la réception (902) de données de capteur représentant le corps de l'acteur et comprenant (i) des données d'image (800) et (ii) des données de profondeur (702) ;

la détermination (904), pour chaque point clé respectif de la pluralité de points clés, d'une valeur de visibilité correspondante basée sur une visibilité du point clé respectif dans les données d'image ;

la détermination, pour chaque point clé respectif de la pluralité de points clés, d'une position 3D de référence correspondante (706, 708, 710A, 710B, 712A, 712B, 714A, 714B, 716, 718A, 718B, 720A, 720B, 722A, 722B) qui est basée sur au moins un voisin le plus proche de la position 3D initiale correspondante dans les données de profondeur, dans lequel la détermination de la position 3D de référence correspondante comprend :

la détermination, pour chaque point clé respectif de la pluralité de points clés, d'une pluralité correspondante de valeurs de différence, dans lequel chaque valeur de différence respective de la pluralité correspondante de valeurs de différence représente une distance entre (i) la position 3D initiale correspondante du point clé respectif et (ii) une position 3D correspondante de chacun d'une pluralité de points 3D des données de profondeur ; et

la sélection, pour chaque point clé respectif de la pluralité de points clés, parmi la pluralité de point 3D des données de profondeur, et sur la base de la pluralité correspondante de valeurs de différence, de l'au moins un voisin le plus proche qui est spatialement le plus proche de la position 3D initiale correspondante ;

la détermination (906), pour chaque point clé respectif de la pluralité de points clés, d'une valeur de champ de profondeur correspondante sur la base d'une distance entre la position 3D initiale correspondante et la position 3D de référence correspondante ;

la détermination (908), sur la base de la valeur de visibilité correspondante et de la valeur de champ de profondeur correspondante de chaque point clé respectif de la pluralité de points clés, d'une valeur de perte ; et

la détermination (910), pour chaque point clé respectif de la pluralité de points clés, d'une position 3D mise à jour correspondante du point clé respectif basée sur la valeur de perte.

2.  Procédé mis en œuvre par ordinateur selon la revendication 1, comprenant également :
    le fait d'amener un dispositif robotique à interagir avec l'acteur sur la base d'une pose représentée par la position 3D mise à jour correspondante de chaque point clé respectif de la pluralité de points clés.

3.  Procédé mis en œuvre par ordinateur selon la revendication 1 ou 2, comprenant également :

    la détermination, pour chaque point clé respectif de la pluralité de points clés, d'une position 3D précédente correspondante du point clé respectif, dans lequel la position 3D précédente correspondante est associée à un premier instant, et dans lequel chaque position 3D initiale correspondante et la position 3D mise à jour correspondante sont associées à un second instant postérieur au premier instant ; et

    la détermination, pour chaque point clé respectif de la pluralité de points clés, d'une valeur de différence de position correspondante basée sur (i) la position 3D initiale correspondante du point clé respectif et (ii) la position 3D précédente correspondante du point clé respectif, dans lequel la valeur de perte est également basée sur la valeur de différence de position correspondante de chaque point clé respectif de la pluralité de points clés.

4.  Procédé mis en œuvre par ordinateur selon la revendication 3, comprenant également :

    la détermination, pour chaque point clé respectif de la pluralité de points clés, d'une position 3D prédite correspondante du point clé respectif en propageant la position 3D précédente correspondante du point clé respectif du premier instant au second instant sur la base d'un mouvement de suivi du point clé respectif, dans lequel chacune de la position 3D initiale correspondante et de la position 3D mise à jour correspondante représente la position 3D prédite mise à jour sur la base des données du capteur, et dans lequel la valeur de différence de position correspondante est basée sur une distance entre (i) la position 3D initiale correspondante du point clé respectif et (ii) la position 3D prédite correspondante du point clé respectif ;

    et/ou dans lequel la valeur de perte est basée sur une somme pondérée de (i) un produit, pour chaque point clé respectif de la pluralité de points clés, de la valeur de visibilité correspondante et d'un carré de la valeur de champ de profondeur correspondante et (ii) un carré de la valeur de différence de position correspondante de chaque point clé respectif de la pluralité de points clés.

5.  Procédé mis en œuvre par ordinateur selon une quelconque revendication précédente,

dans lequel la détermination de la position 3D de référence correspondante comprend :

la détermination, sur la base des données d'image, d'un masque (760) qui indique une partie de l'image occupée par l'acteur ; et

la sélection de l'au moins un voisin le plus proche en sélectionnant, à partir des données de profondeur, au moins un point 3D qui est positionné à l'intérieur du masque.

6. Procédé mis en œuvre par ordinateur selon une quelconque revendication précédente, dans lequel la détermination de la valeur de visibilité correspondante comprend :

la détermination, pour chaque point clé respectif de la pluralité de points clés, d'une valeur de confiance correspondante associée à la détection du point clé respectif dans les données d'image ; et

la détermination, pour chaque point clé respectif de la pluralité de points clés, de la valeur de visibilité correspondante sur la base de la comparaison de la valeur de confiance correspondante à une valeur de confiance seuil.

7. Procédé mis en œuvre par ordinateur selon une quelconque revendication précédente, dans lequel la détermination de la valeur de visibilité correspondante comprend :

la détermination, sur la base des données d'image, d'un masque qui indique une partie de l'image occupée par l'acteur ;

la détermination, pour chaque point clé respectif de la pluralité de points clés, d'une position correspondante du point clé respectif par rapport à au masque ; et

la détermination, pour chaque point clé respectif de la pluralité de points clés, de la valeur de visibilité correspondante basée sur la position correspondante du point clé respectif par rapport au masque ;

et/ou dans lequel la détermination de la valeur de visibilité correspondante comprend :

la détermination, pour chaque point clé respectif de la pluralité de points clés, d'une valeur de profondeur correspondante associée au point clé respectif dans les données de profondeur ; et

la détermination, pour chaque point clé respectif de la pluralité de points clés, de la valeur de visibilité correspondante sur la base de la comparaison d'une profondeur de la position 3D initiale correspondante du point clé respectif à la valeur de profondeur correspondante associée au point clé respectif dans les données de profondeur.

8. Procédé mis en œuvre par ordinateur selon une quelconque revendication précédente, comprenant également : la détermination, pour chaque point clé respectif de la pluralité de points clés, d'une position d'image détectée correspondante (806-822B) représentant une détection du point clé respectif dans les données d'image, dans lequel la détermination de la position 3D mise à jour correspondante du point clé respectif comprend : la sélection de la position 3D mise à jour correspondante de telle sorte qu'une valeur de différence de pixels correspondante (826, 828, 830A, 830B, 832A, 832B, 834A, 834B, 836, 838A, 838B, 840A, 840B, 842A, 842B) de chaque point clé respectif de la pluralité de points clés ne dépasse pas une valeur de différence de pixels seuil, dans lequel la valeur de différence de pixels correspondante représente, pour chaque point clé respectif de la pluralité de points clés, une différence entre (i) la position d'image détectée correspondante du point clé respectif et (ii) une position d'image projetée correspondante du point clé respectif, et dans lequel la position d'image projetée correspondante représente, pour chaque point clé respectif de la pluralité de points clés, une projection de la position 3D mise à jour correspondante du point clé respectif sur les données d'image.

9. Procédé mis en œuvre par ordinateur selon une quelconque revendication précédente, comprenant également : la détermination, pour chaque point clé respectif de la pluralité de points clés, d'une position d'image détectée correspondante représentant une détection du point clé respectif dans les données d'image, dans lequel la détermination de la position 3D mise à jour correspondante du point clé respectif comprend :

la détermination, pour chaque point clé respectif de la pluralité de points clés, d'une position 3D candidate du point clé respectif sur la base de la valeur de perte ;

la détermination, pour chaque point clé respectif de la pluralité de points clés, d'une position d'image projetée correspondante représentant une projection de la position 3D candidate du point clé respectif sur les données d'image ;

la détermination, pour chaque point clé respectif de la pluralité de points clés, d'une valeur de différence de pixels correspondante sur la base d'une différence entre (i) la position d'image détectée correspondante du point clé respectif et (ii) la position d'image projetée correspondante du point clé respectif ;

lorsque la valeur de différence de pixels correspondante de chaque point clé respectif de la pluralité de points clés ne dépasse pas une valeur de différence de pixels seuil, la sélection de la position 3D candidate comme position 3D mise à jour correspondante ; et

lorsque la valeur de différence de pixels correspondante d'au moins un point clé de la pluralité de points clés dépasse la valeur de différence de pixels seuil, la détermination, pour un ou plusieurs points clés de la pluralité de points clés, d'une autre position 3D candidate sur la base de la valeur de perte.

**10.** Procédé mis en œuvre par ordinateur selon une quelconque revendication précédente, dans lequel la pluralité de points clés sont interconnectés pour définir une pluralité de membres (856-882) de l'acteur, et dans lequel la détermination de la position 3D mise à jour correspondante du point clé respectif comprend :

la sélection de la position 3D mise à jour correspondante de telle sorte qu'une longueur de membre correspondante de chaque membre respectif de la pluralité de membres est comprise entre (i) une longueur de membre maximale (886) correspondant au membre respectif et (ii) une longueur de membre minimale (884) correspondant au membre respectif, dans lequel la longueur de membre correspondante de chaque membre respectif de la pluralité de membres est déterminée sur la base des positions 3D mises à jour correspondantes des points clés qui définissent le membre respectif.

**11.** Procédé mis en œuvre par ordinateur selon une quelconque revendication précédente, dans lequel la pluralité de points clés sont interconnectés pour définir une pluralité de membres de l'acteur, et dans lequel la détermination de la position 3D mise à jour correspondante du point clé respectif comprend :

la détermination, pour chaque point clé respectif de la pluralité de points clés, d'une position 3D candidate du point clé respectif sur la base de la valeur de perte ;

la détermination, pour chaque membre respectif de la pluralité de membres, d'une longueur de membre correspondante sur la base des positions 3D candidates des points clés qui définissent le membre respectif ;

lorsque la longueur de membre correspondante de chaque membre respectif de la pluralité de membres est comprise entre (i) une longueur de membre maximale correspondant au membre respectif et (ii) une longueur de membre minimale correspondant au membre respectif, la sélection de la position 3D candidate comme la position 3D mise à jour correspondante ; et

lorsque la longueur de membre correspondante d'au moins un membre de la pluralité de membres n'est pas comprise entre (i) une longueur de membre maximale correspondant à l'au moins à un membre et (ii) une longueur de membre minimale correspondant à l'au moins à un membre, la détermination, pour un ou plusieurs points clés de la pluralité de points clés, d'une autre position 3D candidate sur la base de la valeur de perte.

**12.** Procédé mis en œuvre par ordinateur selon une quelconque revendication précédente, comprenant également :

la détermination, pour chaque point clé respectif de la pluralité de points clés, d'un mouvement suivi basé sur la position 3D mise à jour correspondante du point clé respectif et une position 3D précédente du point clé respectif ; et

la détermination, pour chaque point clé respectif de la pluralité de points clés et sur la base d'un mouvement de suivi de celui-ci, d'une position 3D postérieure du point clé respectif en propageant la position 3D mise à jour correspondante du point clé respectif à un instant postérieur qui correspond à la position 3D postérieure.

**13.** Procédé mis en œuvre par ordinateur selon une quelconque revendication précédente, dans lequel :

les données du capteur représentent un corps correspondant de chacun d'une pluralité d'acteurs ;

la détermination de la position 3D initiale correspondante du point clé respectif comprend la détermination, pour chaque acteur respectif de la pluralité d'acteurs, d'une position 3D initiale spécifique à l'acteur pour chaque point clé respectif d'une pluralité de points clés associés à l'acteur respectif ;

la détermination de la valeur de visibilité correspondante comprend la détermination, pour chaque acteur respectif de la pluralité d'acteurs, d'une valeur de visibilité spécifique à l'acteur correspondante pour chaque point clé respectif de la pluralité de points clés associés à l'acteur respectif ;

la détermination de la valeur de champ de profondeur correspondante comprend la détermination, pour chaque acteur respectif de la pluralité d'acteurs, d'une valeur de champ de profondeur spécifique à l'acteur pour chaque point clé respectif de la pluralité de points clés associés à l'acteur respectif ;

la détermination de la valeur de perte comprend la détermination, pour chaque acteur respectif de la pluralité

27

d'acteurs, d'une valeur de perte spécifique à l'acteur sur la base de la valeur de champ de profondeur spécifique à l'acteur et la valeur de champ de profondeur spécifique à l'acteur pour chaque point clé respectif de la pluralité de points clés associés à l'acteur respectif ; et

la détermination de la position 3D mise à jour correspondante comprend la détermination, pour chaque acteur respectif de la pluralité d'acteurs, d'une position 3D mise à jour spécifique à l'acteur pour chaque point clé respectif de la pluralité de points clés associés à l'acteur respectif sur la base de la valeur de perte spécifique à l'acteur correspondante.

**14.** Système (100) comprenant :

un processeur (102) ; et
un support non transitoire lisible par ordinateur (104) sur lequel sont stockées des instructions qui, lorsqu'elles sont exécutées par le processeur, amènent le processeur à réaliser des opérations comprenant le procédé selon l'une quelconque des revendications 1 à 13.

**15.** Support de stockage non transitoire lisible par ordinateur (104) sur lequel sont stockées des instructions qui, lorsqu'elles sont exécutées par un dispositif informatique, amènent le dispositif informatique à réaliser les opérations comprenant le procédé selon l'une quelconque des revendications 1 à 13.

**Figure 1**

EP 4 386 671 B1

Figure 2

Figure 3

EP 4 386 671 B1

**Figure 4**

EP 4 386 671 B1

**Figure 5**

EP 4 386 671 B1

Figure 6

Figure 7A

**Figure 7B**

**Figure 8A**

**Figure 8B**

DETERMINE, FOR EACH RESPECTIVE KEYPOINT OF A PLURALITY OF KEYPOINTS, A CORRESPONDING INITIAL THREE-DIMENSIONAL (3D) POSITION OF THE RESPECTIVE KEYPOINT, WHEREIN THE PLURALITY OF KEYPOINTS REPRESENTS A CORRESPONDING PLURALITY OF PREDETERMINED BODY LOCATIONS OF A BODY OF AN ACTOR

900

RECEIVE SENSOR DATA REPRESENTING THE BODY OF THE ACTOR AND COMPRISING (I) IMAGE DATA AND (II) DEPTH DATA

902

DETERMINE, FOR EACH RESPECTIVE KEYPOINT OF THE PLURALITY OF KEYPOINTS, A CORRESPONDING VISIBILITY VALUE BASED ON A VISIBILITY OF THE RESPECTIVE KEYPOINT IN THE IMAGE DATA

904

DETERMINE, FOR EACH RESPECTIVE KEYPOINT OF THE PLURALITY OF KEYPOINTS, A CORRESPONDING DEPTH FIELD VALUE BASED ON A DISTANCE BETWEEN THE CORRESPONDING INITIAL 3D POSITION AND A CORRESPONDING REFERENCE 3D POSITION THAT IS BASED ON AT LEAST ONE NEAREST NEIGHBOR OF THE CORRESPONDING INITIAL 3D POSITION IN THE DEPTH DATA

906

DETERMINE, BASED ON THE CORRESPONDING VISIBILITY VALUE AND THE CORRESPONDING DEPTH FIELD VALUE OF EACH RESPECTIVE KEYPOINT OF THE PLURALITY OF KEYPOINTS, A LOSS VALUE

908

DETERMINE, FOR EACH RESPECTIVE KEYPOINT OF THE PLURALITY OF KEYPOINTS, A CORRESPONDING UPDATED 3D POSITION OF THE RESPECTIVE KEYPOINT BASED ON THE LOSS VALUE

910

# Figure 9

**REFERENCES CITED IN THE DESCRIPTION**

**Patent documents cited in the description**

- CN 113610889 A